# EUROPEAN PATENT APPLICATION

(11) **EP 3 065 100 A1**
(43) Date of publication of application: **07.09.2016**
(21) Application number: 15002503.9
(22) Date of filing: 24.08.2015
(51) Int. Cl.: G06Q 20/34, G06Q 20/38, G06Q 20/20

(54) **TERMINAL AND OPERATING METHOD THEREOF**

(30) Priority: 06.03.2015 US 201562129030 P; 15.04.2015 KR 20150053428; 01.06.2015 KR 20150077417
(71) Applicant: LG Electronics Inc., Seoul 07336 (KR)
(72) Inventor: CHOI, Kyungdong, 06772 Seoul (KR); JANG, Hyukjae, 06772 Seoul (KR); LEE, Minho, 06772 Seoul (KR); HWANG, Keumsung, 06772 Seoul (KR)
(74) Representative: Beyer, Andreas

(57) **Abstract**

An operating method of a terminal transmitting card information for payment to a payment terminal, and which includes obtaining store information including a specific payment sequence of a store corresponding to the payment terminal; and transmitting payment signals respectively including a plurality of pieces of card information for payment to the payment terminal according to the specific payment sequence of the store, based on the obtained store information.

## Description

### BACKGROUND OF THE INVENTION

### Field of the Invention

The present disclosure relates to a terminal that provides a payment function and an operating method thereof.

### Discussion of the Background

Terminals can be divided into mobile terminals (portable terminals) and stationary terminals. Mobile terminals can also be divided into handheld terminals and vehicle mounted terminals. Terminals are also implemented in the form of multimedia players having functions such as image or video capture, music or video file playback, games, broadcast reception, etc.

Recently, a variety of financial services using terminals have been provided. So-called "FinTech," which is a compound word for Finance and Technology, refers to financial and IT technology-combined services or companies providing such services, and the most actively propagating area of FinTech is that payments for goods or services are made by transmitting card information stored in terminals.

Payment methods using terminals are expected to become the future payment method due to the convenience of not having to carry an actual card and the security afforded by personal information such as card numbers and the names of card users not having to be disclosed. Recently, the use of credit cards as a way for payment has become widespread, and discount cards or point cards are generally being used in combination with credit cards at the time of payment as various discount services and point rewards services are being developed.

Accordingly, customers present discount cards and/or point cards for earning points, together with credit cards, check cards, or cash, at the time of payment for goods or services. Because such discount cards or point cards are presented according to the payment sequence specific to the store in which a payment is to be made, discount cards and/or point cards should be presented after the payment is made in some stores, and presented before the payment is made in other stores.

Therefore, customers are hesitant to use discount services or point rewards services or do not bother using these services due to the different payment sequences for each store. Even if customers are familiar with the payment sequence of a store, customers have to present point cards or discount cards in addition to credit cards or cash, so that there is also the limitation in that payments take longer.

While methods of payment through terminals may use various communication methods according to a selected payment method, there is also the limitation in that it is difficult for a user to conveniently select and use a desired communication method from among the various communication methods provided by terminals.

### SUMMARY OF THE INVENTION

Accordingly, one object of the present invention is to provide a terminal configured to obtain specific payment information of a store and provide a payment function of the terminal corresponding to the obtained payment information.

Another object of the present invention is to provide a method for payment with a plurality of cards according to the specific payment sequence of a store based on obtained store information.

Still another object of the present invention is to provide a method for easy payment with a user's desired card through a terminal.

To achieve these and other advantages and in accordance with the purpose of the present invention, as embodied and broadly described herein, the present invention provides in one aspect an operating method of a terminal transmitting card information for payment to a payment terminal, and which includes obtaining store information including a specific payment sequence of a store corresponding to the payment terminal; and transmitting payment signals respectively including a plurality of pieces of card information for payment to the payment terminal according to the specific payment sequence of the store, based on the obtained store information.

In another aspect, the present invention provides a terminal transmitting card information for payment to a payment terminal. The terminal includes a display unit configured to display the card information; a wireless communication unit configured to receive store information including a specific payment sequence of a store corresponding to the payment terminal; and a controller configured to transmit payment signals respectively including a plurality of pieces of card information for payment to the payment terminal according to the specific payment sequence of the store through the wireless communication unit, based on the received store information.

In still another aspect, the present invention provides a payment system including a terminal configured to receive store information including a specific payment sequence of a store, and transmit payment signals including a plurality of pieces of card information for payment according to the specific payment sequence of the store, based on the received store information; and a payment terminal configured to receive the payment signals including the plurality of pieces of card information, and perform payment for each of the plurality of pieces of card information, based on the received payment signals.

Further scope of applicability of the present invention will become apparent from the detailed description given hereinafter. However, the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and
wherein:
FIG. 1 is a block diagram of a payment system according to an embodiment of the present invention;
FIG. 2 is a block diagram of a terminal according to an embodiment of the present invention;
FIG. 3 illustrates a terminal having a front fingerprint sensor according to an embodiment of the present invention;
FIG. 4 illustrates a terminal having a rear fingerprint sensor according to an embodiment of the present invention;
FIG. 5 is a block diagram of a payment terminal according to an embodiment of the present invention;
FIGs. 6 and 7 are flow diagrams illustrating an operating method of a payment system according to an embodiment of the present invention;
FIG. 8 illustrates a screen display according to acquiring of store information according to an embodiment of the present invention;
FIG. 9 illustrates a card image displaying screen according to an embodiment of the present invention;
FIGs. 10A and 10B illustrate switching displayed card images according to an embodiment of the present invention;
FIG. 11 illustrates a card image display according to availability according to an embodiment of the present invention;
FIGs. 12A and 12B illustrate resizing of card images according to an embodiment of the present invention;
FIG. 13 illustrates a card image displaying screen according to another embodiment of the present invention;
FIGs. 14A and 14B illustrate switching displayed card images according to another embodiment of the present invention;
FIG. 15 illustrates a card image displaying screen according to still another embodiment of the present invention;
FIGs. 16A to 16D illustrate a card image display according to the specific payment sequence of a store according to an embodiment of the present invention;
FIG. 17 is an illustration of a user input for payment of an embodiment of the present invention;
FIG. 18 is an illustration of a user input for payment of another embodiment of the present invention;
FIG. 19 illustrates a vibration of a terminal within a payment possible area according to an embodiment of the present invention;
FIG. 20 illustrates a vibrating operation for a payment possible area of a terminal according to an embodiment of the present invention;
FIG. 21 illustrates a vibrating operation for a payment possible area of a terminal according to another embodiment of the present invention;
FIG. 22 illustrates a vibrating operation for payment inability according to an embodiment of the present invention;
FIG. 23 illustrates a screen displaying a card image corresponding to a first payment according to an embodiment of the present invention;
FIG. 24 illustrates user fingerprinting according to an embodiment of the present invention;
FIG. 25 illustrates a screen displaying the movement of a first card image according to an embodiment of the present invention;
FIG. 26 illustrates a screen displaying a first card image according to an embodiment of the present invention;
FIG. 27 illustrates a screen displaying the movement of a first card image according to an embodiment of the present invention;
FIG. 28 illustrates luminescence of an alarm LED according to an embodiment of the present invention;
FIG. 29 illustrates a user input for displaying first payment authorization details according to an embodiment of the present invention;
FIG. 30 illustrates a display of first payment authorization information according to an embodiment of the present invention;
FIG. 31 illustrates a screen displaying a card image corresponding to a second payment according to an embodiment of the present invention;
FIG. 32 illustrates a screen displaying the movement of a second card image according to an embodiment of the present invention;
FIG. 33 illustrates a screen displaying a second card image according to an embodiment of the present invention;
FIG. 34 illustrates a screen displaying the movement of a second card image according to an embodiment of the present invention;
FIG. 35 illustrates a user input for displaying second payment authorization details according to an embodiment of the present invention;
FIG. 36 illustrates a display of second payment authorization information according to an embodiment of the present invention;
FIG. 37 illustrates a screen displaying a card image corresponding to a third payment according to an embodiment of the present invention;
FIG. 38 illustrates a screen displaying the movement of a third card image according to an embodiment of the present invention;
FIG. 39 illustrates a screen displaying a third card image according to an embodiment of the present invention;
FIG. 40 illustrates a screen displaying the movement of a third card image according to an embodiment of the present invention;
FIG. 41 illustrates a user input for displaying third payment authorization details according to an embodiment of the present invention;
FIG. 42 illustrates a display of third payment authorization information according to an embodiment of the present invention;
FIG. 43 illustrates a card image displaying screen according to another embodiment of the present invention;
FIG. 44 illustrates a user input for displacement of a card image according to an embodiment of the present invention;
FIG. 45 illustrates card images displaced by a user input according to an embodiment of the present invention;
FIG. 46 illustrates a user input for payment for a plurality of cards according to an embodiment of the present invention;
FIG. 47 illustrates a payment progression display according to an embodiment of the present invention;
FIG. 48 illustrates a payment progression display according to another embodiment of the present invention;
FIG. 49 illustrates a user input for creating an integrated card image having information on a plurality of cards according to an embodiment of the present invention;
FIG. 50 illustrates a first integrated card image according to an embodiment of the present invention;
FIG. 51 is a flow diagram illustrating an operating method of a payment system according to another embodiment of the present invention;
FIG. 52 illustrates a pay tab display according to an embodiment of the present invention;
FIG. 53 illustrates a pay tab display according to another embodiment of the present invention;
FIG. 54 illustrates a user input to a pay tab according to an embodiment of the present invention;
FIG. 55 illustrates a card image display corresponding to a magnetic pay tab according to an embodiment of the present invention;
FIG. 56 illustrates a user input to a pay tab according to another embodiment of the present invention;
FIG. 57 illustrates a card image display corresponding to an NFC pay tab according to another embodiment of the present invention;
FIG. 58 illustrates a pay tab display according to still another embodiment of the present invention;
FIG. 59 illustrates a user input to a pay tab according to still another embodiment of the present invention;
FIG. 60 illustrates a card image display according to an embodiment of the present invention;
FIG. 61 illustrates a control window display according to an embodiment of the present invention;
FIG. 62 illustrates a card information display according to an embodiment of the present invention;
FIG. 63 illustrates a card selection according to an embodiment of the present invention; and
FIG. 64 illustrates a discount information display according to details of card usage according to an embodiment of the present invention.

### DETAILED DESCRIPTION OF THE EMBODIMENTS

Reference will now be made in detail to the embodiments of the present disclosure, examples of which are illustrated in the accompanying drawings. The same reference numeral refers to the same or a similar element regardless of reference number, and a redundant description thereof will be omitted. Suffixes used for elements herein, such as "module" and "unit", are given or mixed only considering easy writing of this specification, and do not have a meaning or function differentiating from each other.

The accompanying drawings are provided in order to facilitate understanding of the embodiments disclosed herein, so that the present inventive concept should not be limited thereto but should be construed to include any modification, equivalent, and alternative without departing from the spirit and technical scope of the present disclosure. Terms of "first" or "second" may be used to describe various elements, however the elements should not be limited to these terms. These terms are used only to differentiate one element from another one.

When an element is referred to as being "connected to" or "in contact with" another element, it should be understood that the element may be directly connected to or directly in contact with the other element, or intervening elements may also be present. Further, when an element is referred to as being "directly connected to" or "directly in contact with" another element, it should be understood that there is no intervening element.

Examples of terminals described herein may include cellular phones, smart phones, laptop computers, personal digital assistants (PDA), portable multimedia player (PMP), navigators, slate PCs, tables PCs, ultrabooks, and wearable devices such as smartwatches, smart glasses and head mounted displays (HMD).

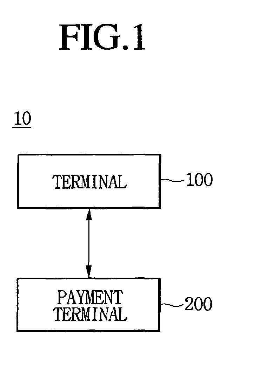

A payment system 10 according to an embodiment will be described with reference to FIG. 1. In particular, FIG. 1 is a block diagram of a payment system according to an embodiment of the present invention. Referring to FIG.1, the payment system 10 includes a terminal 100 and a payment terminal 200.

The terminal 100 can display various kinds of information related to payment, and transmit payment information to the payment terminal 200. The terminal 100 can receive authorization information according to payment information transmitted from the payment terminal 200, and display the received authorization information. Herein, the payment information refers to card information.

The payment terminal 200 can receive payment information related to payment from the terminal 100, and perform payment based on the received payment information. The payment terminal 200 can transmit authorization information according to the performed payment to the terminal 100.

Furthermore, the payment terminal 200 can transmit, to the terminal 100, store information on a store in which the payment terminal 200 is located. Herein, the store information may include at least one of location information of a store, information on goods or services provided by a store, or discount information of a store. The store information may also include specific payment information of a store. The specific payment information of a store may include at least one of information on payment method available in a corresponding store, the specific payment sequence of a store, or discount information according to payment method.

The specific payment sequence of a store may refer to a payment sequence between payment methods such as credit cards, check cards and cash, point cards for point rewards services, and discount cards for discount services. For example, the specific payment sequence of the A store may be in the sequence of a point card, a discount card, and a payment card. The specific payment sequence of the B store may be in the sequence of a discount card, a point card, and a payment card. The specific payment sequence of the C store may be in the sequence of a payment card, a discount card, and a point card. As described above, the specific payment sequence of a store may be different or the same at each store.

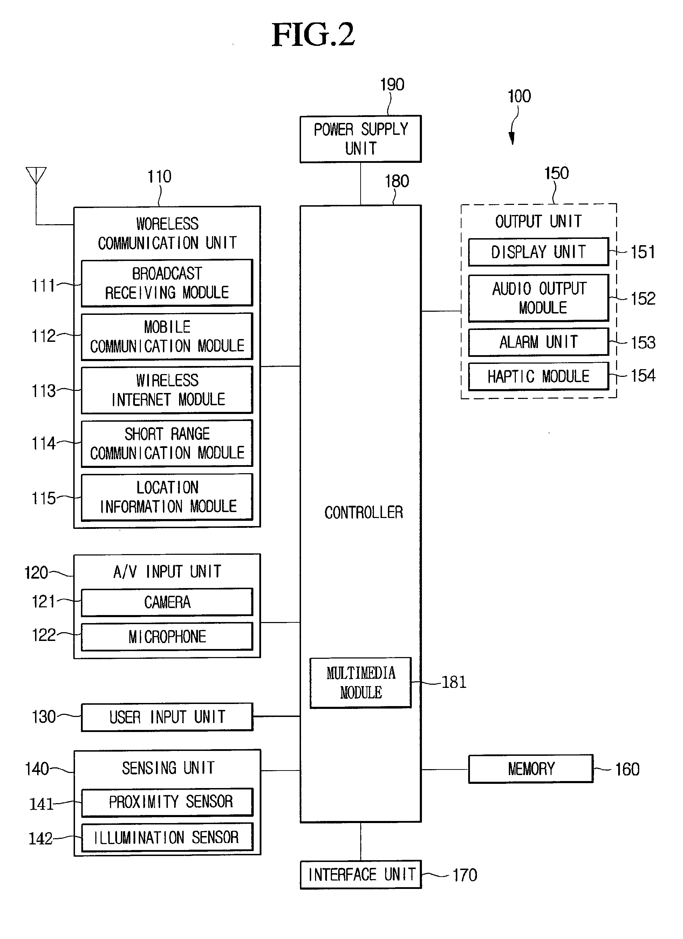

The payment terminal 200 can refer to a point of sales (POS) terminal. Next, the configuration of the terminal 100 according to an embodiment will be described with reference to FIG. 2. In particular, FIG. 2 is a block diagram of a terminal 100 according to an embodiment of the present invention;

As shown, the terminal 100 can include a wireless communication unit 110, an audio/video (A/V) input unit 120, a user input unit 130, a sensor unit 140, an output unit 150, a memory 160, an interface unit 170, a controller 180, and a power supply 190. Terminals having more elements or fewer elements may be implemented.

The wireless communication unit 110 may include at least one module that enables wireless communication between the terminal 100 and a wireless communication system, between the terminal 100 and another terminal 100, between the terminal 100 and other device, or between the terminal 100 and an external server. Furthermore, the wireless communication unit 110 may include at least one module connecting the terminal 100 to at least one network.

For example, in FIG. 2, the wireless communication unit 110 includes at least one of a broadcast receiving module 111, a mobile communication module 112, a wireless internet module 113, a short range communication module 114, or a location information module 115. The broadcast receiving module 111 receives broadcast signals and/or broadcast related information from an external broadcast management server through a broadcast channel.

The broadcast channel may include a satellite channel and a terrestrial channel. The broadcast management server may refer to a server which generates and transmits broadcast signals and/or broadcast related information, or a server which receives generated broadcast signals and/or broadcast related information and transmits the broadcast signals and/or broadcast related information to a terminal. The broadcast signal may include not only TV broadcast signals, radio broadcast signals and data broadcast signals, but also broadcast signals in the form of a combination of a data broadcast signal and a TV broadcast signal or a radio broadcast signal.

The broadcast related information may refer to information related to broadcast channels, broadcast programs, or broadcast service providers. The broadcast related information may also be provided through a mobile communication network. In the latter case, the broadcast related information may be received by the mobile communication module 112. The broadcast related information may exist in various forms. For example, the broadcast related information may exist in the form of an electronic program guide (EPG) of a digital multimedia broadcasting (DMB) system or in the form of an electronic service guide (ESG) of a digital video broadcast-handheld (DVB-H) system.

The broadcast receiving module 111 may receive digital broadcast signals using digital broadcasting systems such as a digital multimedia broadcasting-terrestrial (DMB-T) system, a digital multimedia broadcasting-satellite (DMB-S) system, a media forward link only (MediaFLO) system, a digital video broadcast-handheld (DVB-H) system, and an integrated services digital broadcast-terrestrial (ISDB-T) system. The broadcast receiving module 111 may be configured to be suitable for other broadcasting systems as well as the aforesaid digital broadcasting systems. Broadcast signals and/or broadcast related information received through the broadcast receiving module 111 may be stored in the memory 160.

The mobile communication module 112 performs wireless signal transmission/reception with at least one of a base station, an external terminal, or a server in a mobile communication network. The wireless signal may include a voice call signal, a video telephony call signal, or data in various forms according to transmission and reception of text/multimedia messages.

The wireless internet module 113 refers to a module for accessing wireless internet, and may be included in the terminal 100 or may be externally attached to the terminal 100. A wireless LAN (WLAN, Wi-Fi), wireless broadband (Wibro), world interoperability for microwave access (Wimax), high speed downlink packet access (HSDPA) and the like may be used as a wireless internet technique.

The short range communication module 114 refers to a module for short range communication. Bluetooth, radio frequency identification (RFID), infrared data association (IrDA), ultra wideband (UWB), ZigBee, near field communication (NFC) and the like may be used as a short range communication technique. Furthermore, the short range communication module 114 may also transmit a magnetic signal.

The location information module 115 is a module for obtaining a location (or current location) of a terminal, and a representative example thereof is a global positioning system (GPS) module or a wireless fidelity (Wi-Fi) module. For example, when a terminal uses a GPS module, the location of the terminal may be obtained using a signal transmitted from a GPS satellite. As another example, when a terminal uses a Wi-Fi module, the location of the terminal may be obtained based on information on a wireless access point (AP) that performs wireless signal transmission or reception with the Wi-Fi module. If necessary, the location information module 115 may perform a certain function of different modules of the wireless communication unit 110 in order to substitutionally or additionally obtain data about the location of a terminal. The location information module 115 is a module used to obtain a location (or current location) of a terminal, and is not limited to a module which directly calculates or obtains a location of a terminal.

Referring to FIG. 2, the audio/video (A/V) input unit 120 can input an audio signal or a video signal, and includes a camera 121 and a microphone 122. The camera 121 processes image frames such as still images or videos obtained by an image sensor in a video telephony mode or a photographing mode. The processed image frames may be displayed on a display unit 151. The image frames processed by the camera 121 may be stored in the memory 160, or transmitted to an external device through the wireless communication unit 110. Two or more cameras 121 may be provided depending on operating environments.

The microphone 122 receives an external audio signal in a phone call mode, a recording mode, a voice recognition mode, or the like, and processes the received audio signal into electrical voice data. The processed voice data may be converted into a form that can be transmitted to a mobile communication base station through the mobile communication module 112, and output in a phone call mode. The microphone 122 may employ various noise removal algorithms for removing noise generated in the process of receiving external audio signals.

The user input unit 130 may include a touch key or a mechanical key, etc. for receiving information from a user.

The sensor unit 140 may include at least one sensor for sensing at least one of internal information of a terminal, environmental information surrounding the terminal, or user information. For example, the sensor unit 140 may include at least one of a proximity sensor 141, an illumination sensor 142, a touch sensor, an acceleration sensor, a magnetic sensor, a G-sensor a gyroscope sensor, a motion sensor, a RGB sensor, an infrared (IR) sensor, a fingerprint sensor, an ultrasonic sensor an optical sensor such as a camera 121 and a microphone 122, a battery gauge, an environmental sensor such as a barometer, a hygrometer, a thermometer, a radiation sensor, a thermal sensor and a gas sensor, a chemical sensor such as an electronic nose, a healthcare sensor and a biometric sensor, or a fingerprint sensor. Also, a terminal disclosed herein may be used by combining a plurality of pieces of information sensed by at least two or more sensors of these sensors.

The output unit 150 can generate visual, auditory, and/or haptic output, and include at least one of a display unit 151, an audio output module 152, an alarm unit 153, and a haptic module 154. The display unit 151 can realize a touch screen in a layered structure with or integrated with a touch sensor. The touch screen may act as the user input unit 130 providing an input interface between the terminal 100 and a user, and also provide an output interface between the terminal 100 and a user.

The display unit 151 displays/outputs information processed by the terminal 100. For example, when the terminal is in a phone call mode, the display unit 151 displays a user interface (UI) or a graphic user interface (GUI) related to a phone call. When the terminal 100 is in a video telephony mode or a photographing mode, the display unit 151 displays a captured and/or received image, a UI, or a GUI.

The display unit 151 may include at least one of a liquid crystal display (LCD), a thin film transistor-liquid crystal display (TFT LCD), an organic light-emitting diode (OLED), a flexible display, or a 3D display. Some of these displays can be configured as a transparent or light-transmissive type so that the outside can be seen therethrough. These may be referred to as a transparent display, and a representative example of the transparent display is a transparent OLED (TOLED). The rear surface of the display unit 151 may be configured as the light-transmissive type structure. With such a structure, a user can see an object located at the rear of the terminal body through an area occupied by the display unit 151 in the terminal body.

Two or more display units 151 can also exist depending on the implementation type of the terminal 100. For example, a plurality of display units can be disposed apart or integrated on one surface of the terminal 100, or be disposed on different surfaces, respectively. When the display unit 151 and a sensor detecting a touch (hereinafter, referred to as a 'touch sensor") form a cross-layered structure (hereinafter, referred to as a 'touch screen"), the display unit 151 may also be used as an input device in addition to an output device. The touch sensor may be in the form of, for example, a touch film, a touch sheet, or a touch pad.

The touch sensor can be configured to convert a variation in pressure applied to a specific region of the display unit 151 or a variation in capacitance generated at a specific region of the display unit 151 into an electrical input signal. The touch sensor can be configured to detect pressure and capacitance at the time of a touch as well as position and area of the touch. When a touch is input to the touch sensor, a signal(s) corresponding thereto is/are transmitted to a touch controller. The touch controller processes the signal(s), and then transmits corresponding data to the controller 180. The controller 180 can thus recognize, for example, which region of the display unit 151 is touched.

Furthermore, based on the area, pressure and capacitance at the time of a touch, the controller 180 can determine the type of a user's touch input. The controller 180 can thus differentiate between a finger touch, a nail touch, a knuckle touch and a multi touch using a plurality of fingers, which are performed by a user.

The proximity sensor 141 may be disposed in an internal area (covered by the touch screen) of the terminal or in the vicinity of the touch screen. The proximity sensor 141 refers to a sensor detecting whether or not an object approaches a predetermined detecting surface or exists in the vicinity, by using an electromagnetic force or infrared rays without having any mechanical contact. The proximity sensor 141 has a longer lifespan than a contact sensor, and its utilization is also higher.

Examples of the proximity sensor 141 include a transmissive photoelectric sensor, a direct reflective photoelectric sensor, a mirror reflective photoelectric sensor, a high-frequency oscillating proximity sensor, a capacitive proximity sensor, a magnetic proximity sensor, and an infrared proximity sensor. When the touch screen is electrostatic, the touch screen is configured to detect proximity of a pointer using an electric field variation caused by the proximity of the pointer. In this instance, the touch screen (touch sensor) may be classified as a proximity sensor.

Hereinafter, for descriptive convenience, an action in which the pointer comes close to the touch screen without contacting the touch screen so that the pointer is recognized as being located on the touch screen is referred to as a "proximity touch", and an action of bringing the pointer into contact with the touch screen is referred to as a "contact touch." The point on the touch screen at which the pointer makes a proximity touch means a point vertically corresponding to the touch screen when the pointer is proximately touched.

The proximity sensor 141 detects a proximity touch and a proximity touch pattern (e.g., a proximity touch distance, a proximity touch direction, a proximity touch velocity, a proximity touch time, a proximity touch point, a proximity touch moving state, etc.). Information corresponding to the detected proximity touch action and proximity touch pattern may be displayed on the touch screen.

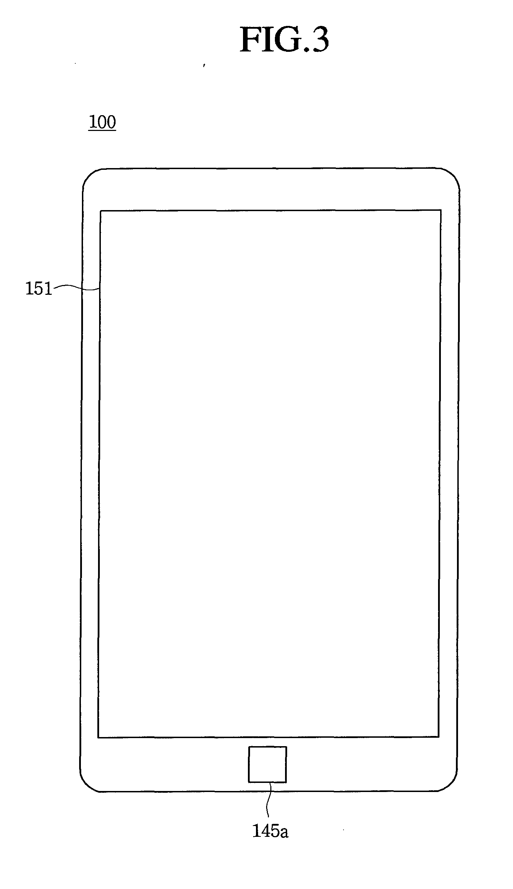

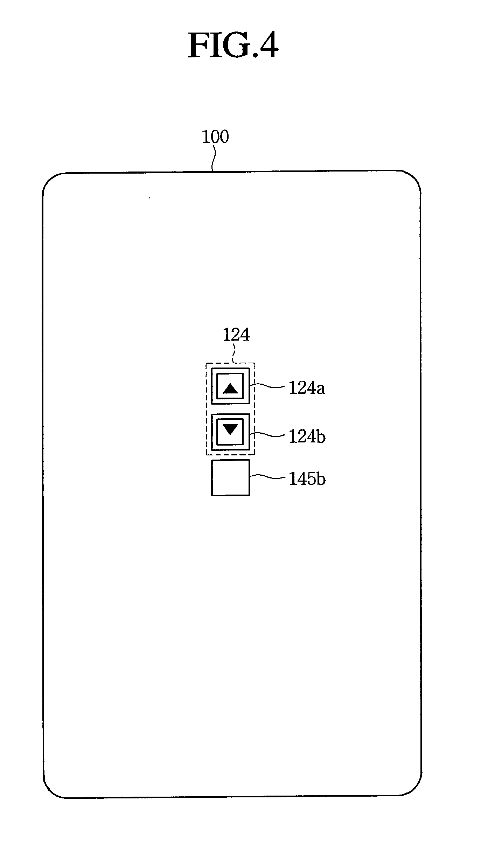

The fingerprint sensor can recognize a user fingerprint. The fingerprint sensor can recognize a user fingerprint using a front fingerprint sensor 145a provided in the front of the terminal 100 and/or a rear fingerprint sensor 145b provided in the rear of the terminal 100 (the fingerprint sensor will be described in detail with reference to FIGs. 3 and 4).

In particular, FIG. 3 illustrates a terminal having a front fingerprint sensor 145a according to an embodiment of the present invention. Referring to FIG. 3, the terminal 100 can have the front fingerprint sensor 145a in the front lower end of the terminal 100. The front fingerprint sensor 145a can recognize a user fingerprint and transmit fingerprint information on the recognized fingerprint to the controller 180. Also, the front fingerprint sensor 145a can be in the form of a push-key, and thus receive a physical push input by a user.

FIG. 4 illustrates a terminal having a rear fingerprint sensor 145b according to an embodiment of the present invention. Referring to FIG. 4, the terminal 100 can have the rear fingerprint sensor 145b in the rear of the terminal 100. The rear fingerprint sensor 145b can recognize a user fingerprint and transmit fingerprint information on the recognized fingerprint to the controller 180. Also, the rear fingerprint sensor 145b can be in the form of a push-key, and thus receive a physical push input by a user.

The terminal 100 can also have a rear key 124 in the rear of the terminal 100. The rear key 124 can include an upper end key 124a and a lower end key 124b. The rear key 124 can be either a physical key or a touch key. Also, the rear key 124 can be a touch key capable of receiving a physical push input.

Referring again to FIG. 2, the audio output module 152 can output audio data received from the wireless communication unit 110 or stored in the memory 160 in a call signal receiving mode, a phone call mode or a recording mode, a voice recognition mode, and a broadcast receiving mode. The audio output module 152 can output audio signals related to functions (e.g., a call signal incoming tone, a message incoming tone, etc.) performed in the terminal 100. The audio output module 152 can include a receiver, a speaker, a buzzer, and the like.

The alarm unit 153 outputs a signal for indicating the generation of an event in the terminal 100. Examples of the events generated in the terminal include a call signal receiving, a message receiving, a key signal input, and a touch input. The alarm unit 153 can output signals in different forms from video signals or audio signals, such as a signal for indicating the generation of an event through vibration. The video signal or the audio signal can also be output through the display unit 151 or the audio output module 152, so that the display unit 151 and the audio output module 152 can classified as a part of the alarm unit 153.

The haptic module 154 generates various haptic effects that can be sensed by a user. A representative example of the haptic effects generated by the haptic module 154 is vibration. The intensity and pattern of vibration generated by the haptic module 154 are controllable. For example, different types of vibration can be output in combination or sequentially.

The haptic module 154 can generate a variety of haptic effects in addition to vibration including effects according to stimulus such as arrangement of pins vertically moving against a contact skin surface, a jet force or sucking force of air through a jet hole or a sucking hole, rubbing skin surfaces, contact with an electrode, and an electrostatic force, and effects according to reproduction of cold and warmth using an element capable of absorbing or generating heat.

The haptic module 154 can not only transmit haptic effects through direct contact but also allow a user to feel haptic effects through a kinesthetic sense of the user's fingers or arms. Two or more haptic modules 154 can be provided depending on configurational aspects of the terminal 100. Furthermore, the haptic module 154 can include a vibrator capable of generating a vibration. For example, the haptic module 154 can include at least one vibration motor, and the vibration motor can be in various forms such as a bar type and a coin type. The haptic module 154 can be disposed in various positions depending on the type of the terminal 100.

The memory 160 stores data supporting various functions of the terminal 100. The memory 160 can store a plurality of application programs or applications, and data and commands for operating the terminal 100. At least some of the application programs can be downloaded from an external server through wireless communication. Also, at least some of the application programs can exist on the terminal 100 since at the factory for basic functions (e.g., reception and transmission of phone signals, incoming and outgoing of messages) of the terminal 100. The application programs can be stored in the memory 160 and installed on the terminal 100 so that the operation (or function) of the terminal is performed by the controller 180.

Furthermore, the memory 160 stores payment information on various payment method. For example, the memory 160 can store information on payment cards for payment, such as credit cards and check cards, information on point cards for earning points or mileages, and information on discount cards for discount.

The memory 160 can include at least one type of storage medium of a flash memory, a hard disk type memory, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, or an optical disk. The terminal 100 can also operate in relation to a web storage performing the storing function of the memory 160 on the internet.

The interface unit 170 serves as a path to all home devices connected to the terminal 100. The interface unit 170 receives data from external devices or power and transmits the data or power to internal elements of the terminal 100, or transmits data in the terminal to external devices. For example, the interface unit 170 can include a wired/wireless headset port, an external charger port, a wired/wireless data port, a memory card port, a port for connecting a device having an identification module, an audio I/O port, a video I/O port, an earphone port, and the like.

The identification module is a chip that stores various kinds of information for authenticating authority to use the terminal 100, and can include a user identity module (UIM), a subscriber identity module (SIM) and a universal subscriber identity module (USIM). A device having the identification module (hereinafter, referred to as an 'identification device7) can be manufactured in the form of a smart card. Accordingly, the identification device can be connected to the terminal 100 through a port.

The interface unit 170 can also be a path through which power from an external cradle is provided to the terminal 100 when the terminal 100 is connected to the external cradle, or a path through which various command signals input by a user from the cradle are transmitted to the terminal. The various command signals or the power input from the cradle can act as a signal for confirming whether the terminal is correctly installed on the cradle.

The controller 180 typically controls overall operation of the terminal. For example, the controller 180 performs control and process for voice call, data communication, video telephony and the like. The controller 180 can also include a multimedia module 181 for playing multimedia. The multimedia module 181 can be included in the controller 180, or can be separated from the controller 180.

The controller 180 can perform a pattern recognition process by which handwriting input or picture-drawing input on the touch screen can be respectively recognized as characters or images. The controller 180 can transmit payment information stored in the memory 160 to the terminal 200 through the short range communication module 114. Furthermore, the controller 180 can display various kinds of information related to payment on the display unit 151.

The power supply 190 receives external power and internal power, and provides power required for operation of each element under the control of the controller 180. A variety of embodiments described herein can be implemented in a recording media that is readable by a computer or other similar device, for example, using software, hardware or combinations thereof.

According to a hardware implementation, the embodiments described herein can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or other electrical units for executing functions. In some cases, the embodiments can be implemented by the controller 180.

According to a software implementation, embodiments such as procedures or functions can be implemented together with a separate software module executing at least one function or operation. Software codes can be implemented according to a software application written in an appropriate programming language. The software codes can be stored in the memory 160 and executed by the controller 180.

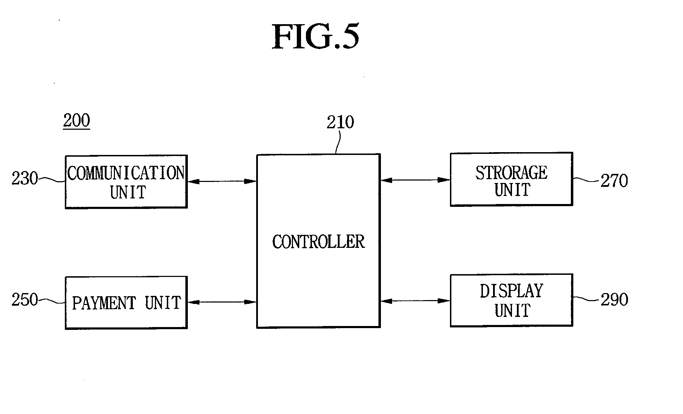

The aforesaid terminal 100 can be a mobile terminal or a stationary terminal. Therefore, the terminal 100 can be directly carried by a user, or mounted in a certain area. Hereinafter, the payment terminal 200 according to an embodiment will be described with reference to FIG. 5.

FIG. 5 is a block diagram of a payment terminal according to an embodiment of the present invention. Referring to FIG. 5, the payment terminal can include a controller 210, a communication unit 230, a payment unit 250, a storage unit 270, and a display unit 290. The controller 210 controls the overall operation of the payment terminal 200.

Further, the controller 210 can transmit at least one of store information or specific payment information to the terminal 100 through the communication unit 230. The controller 210 can also receive payment information from the terminal 100 through the communication unit 230 or the payment unit 250. Based on the received payment information, the controller 210 performs payment for goods or services. The controller 210 can also transmit authorization information according to the performed payment to the terminal 100 through the communication unit 230.

The communication unit 230 communicates with the terminal 100 using, for example, Bluetooth, radio frequency identification (RFID), infrared data association (IrDA), ultra wideband (UWB), ZigBee, or near field communication (NFC). The communication unit 230 can also transmit and receive a magnetic signal, and transmit various signals in the form of a high-frequency wave.

In addition, the payment unit 250 can obtain payment information from an actual card. For example, the payment unit 250 can obtain payment information from a magnetic stripe or an integrated circuit chip (IC chip) of an actual card. Further, the storage unit 270 can store at least one of store information or specific payment information. The storage unit 270 can also store authorization information according to a performed payment.

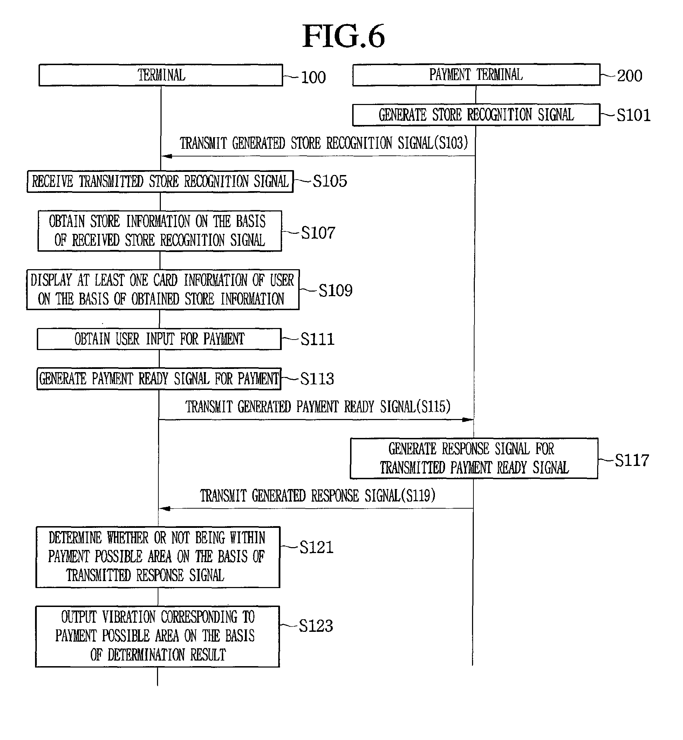

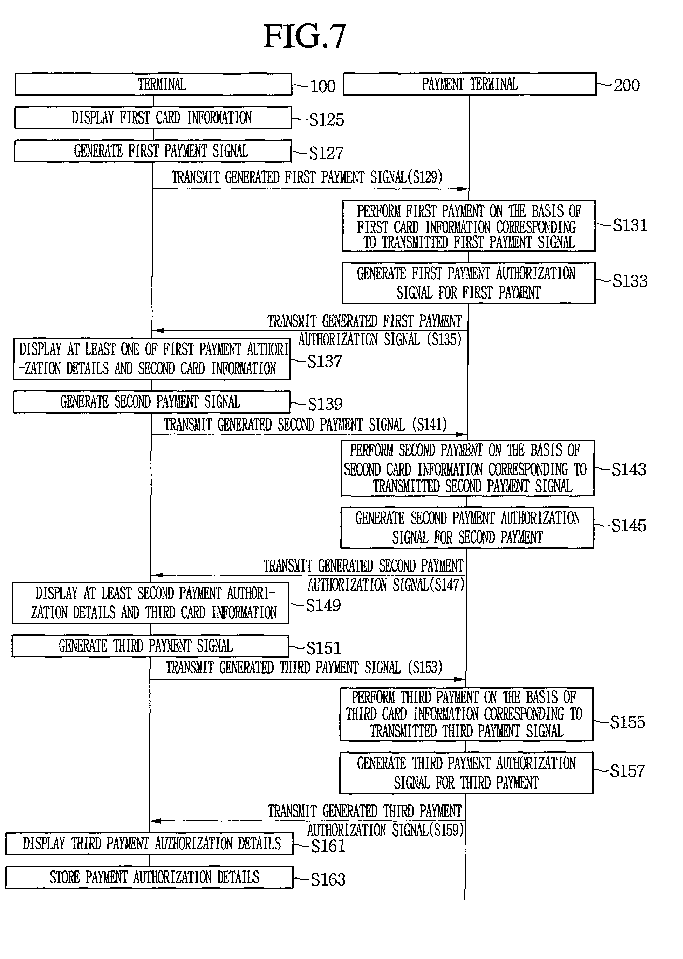

The display unit 290 can display various kinds of information related to payment. For example, the display unit 290 can display payment information obtained through the communication unit 230 or the payment unit 250 and authorization information according to performed payment. Operation of the payment system 10 according to the present disclosure will now be described based on the above description and with respect to FIGs. 6 and 7. In particular, FIGs. 6 and 7 are flow diagrams illustrating an operating method of the payment system 10 according to an embodiment of the present invention;

Referring to FIG. 6, the controller 210 in the payment terminal 200 generates a store recognition signal that is a unique signal for recognizing the store (S101). The controller 210 can generate the store recognition signal in which the payment terminal 200 is located. The store recognition signal generated by the controller 210 can include various kinds of information such as the store name, the store location, goods or services provided by the store, payment method available in the store, and the specific payment sequence of the store.

Further, the controller 210 in the payment terminal 200 transmits the generated store recognition signal to the terminal 100 through the communication unit 230 (S103). According to an embodiment, the controller 210 can transmit the generated store recognition signal to the terminal 100 using a Bluetooth low energy (BLE) method through the communication unit 230. Herein, the BLE method can correspond to known Beacon. Also, the controller 210 can transmit the generated store recognition signal to the terminal 100 using a RFID method through the communication unit 230, or in the form of a high-frequency wave through the communication unit 230. Herein, the high-frequency wave transmitting the store recognition signal can correspond to a frequency region which can not be recognized by a user.

The aforementioned transmission of the store recognition signal is an illustrative example, and the present invention is not limited thereto. Therefore, the payment can terminal 200 can transmit the generated store recognition signal in various ways depending on the choice by a user or a designer.

The terminal 100 then receives the transmitted store recognition signal (S105), and obtains store information based on the received store recognition signal (S107). The controller 180 in the terminal 100 can receive the store recognition signal transmitted through the short range communication module 114 or the microphone 122. According to an embodiment, the controller 180 can receive the store recognition signal transmitted using a BLE method through the short range communication module 114. Also, the controller 180 can receive the store recognition signal transmitted in the form of a high-frequency wave through the microphone 122. The aforementioned reception of the store recognition signal is an illustrative example, and the present invention is not limited thereto. Therefore, the terminal 100 can receive the store recognition signal in various ways depending on the type of the store recognition signal transmitted by the payment terminal 200.

The controller 180 in the terminal 100 can obtain store information including specific payment information related to a payment method of the store based on the received store recognition signal. Herein, the specific payment information of a store can include information on a payment method available in a store having the payment terminal 200 transmitting the store recognition signal, the specific payment sequence of a store, or discount information according to payment method. The specific payment sequence of a store can refer to a payment sequence between payment cards as a payment method such as credit cards and check cards, point cards for point rewards services, and discount cards for discount services.

According to an embodiment, based on the received store recognition signal, the controller 180 can obtain store information included in the store recognition signal. According to another embodiment, based on the received store recognition signal, the controller 180 can search store information matching the received store recognition signal, and obtain the store information matching the received store recognition signal based on the searched result. For example, the controller 180 can search store information matching the received store recognition signal from at least one piece of specific payment information stored in the memory 160 or a server. Based on the searched result, the controller 180 can obtain the store information matching the received store recognition signal.

From the obtained store information, the controller 180 can obtain information on the specific payment sequence of a store in which the payment terminal 200 (which has transmitted the store recognition signal) is located. For example, the specific payment sequence of a first store in which the payment terminal 200 is located can be in the sequence of a payment card, a point card, and a discount card. Based on the received store recognition signal, the controller 180 can display on the display unit 151 store information on the store in which the terminal 100 is located. The controller 180 can also display on the display unit 151 a store information received pop-up window indicating that store information has been obtained.

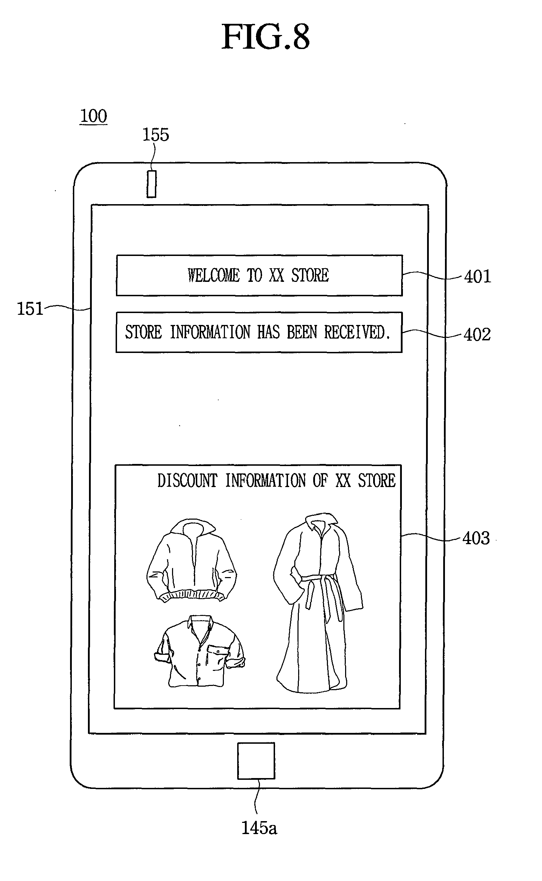

A description will be provided below with reference to FIG. 8. In particular, FIG. 8 illustrates a screen display according to acquiring of store information according to an embodiment of the present invention. Referring to FIG. 8, the controller 180 can display the obtained store information on the display unit 151. In more detail, the controller 180 can display a store message 401 corresponding to the received store recognition signal.

Also, the controller 180 can display on the display unit 151 a store information received pop-up window 402 indicating that store information matching the received store recognition signal has been obtained. Furthermore, based on the obtained store information, the controller 180 can also display a store discount info window 403 indicating discount information of the store on the display unit 151.

In addition, the controller 180 can emit an alarm LED 155 light when a store recognition signal is received or store information corresponding to the received store recognition signal is obtained. For example, the alarm LED 155 can emit three-color light. Herein, the three-color can be a blue color. Also, the controller 180 can control the alarm unit 153 to generate a vibration when a store recognition signal is received or store information corresponding to the received store recognition signal is obtained. For example, the alarm unit 153 can generate a first vibration indicating that the store recognition signal has been received. Herein, the first vibration can be a vibration vibrating in a first intensity level for a first period of time.

Referring again to FIG. 6, based on the obtained store information, the controller 180 in the terminal 100 displays information on at least one card of a user on the display unit 151 (S109). For example, based the obtained store information, the controller 180 can display at least one card available in a store of a plurality of cards of a user stored in the memory 160 on the display unit 151. Herein, examples of at least one card available in a store can include payment cards as payment method such as credit cards, check cards and cash cards, point cards for point rewards services, and discount cards for discount services.

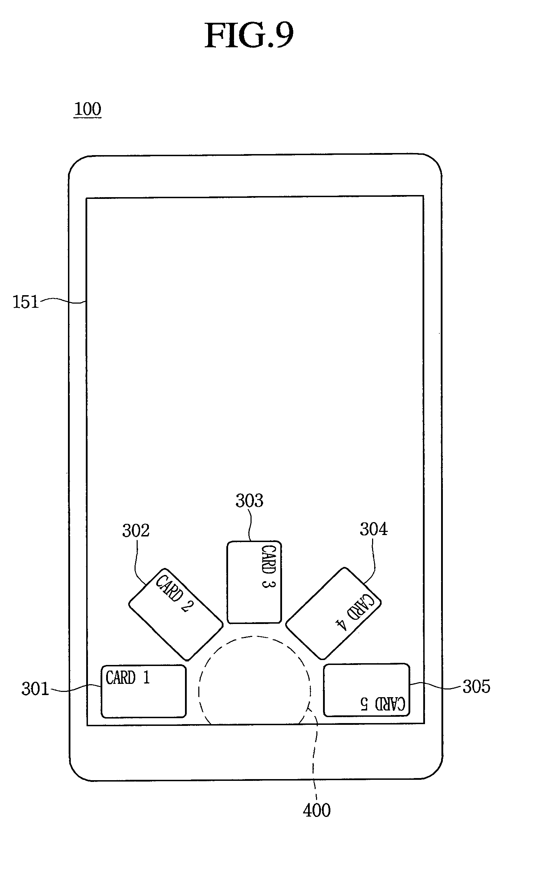

Also, based on the obtained store information, the controller 180 can display card information on at least one card of a user stored in the memory 160 on the display unit 151 according to the payment sequence of a store. A display of card information of the terminal 100 according to an embodiment will be described with reference An embodiment of a display of card information will be described with reference to FIGs. 9 to 10B. In particular, FIG. 9 illustrates a card image displaying screen according to an embodiment of the present invention. Referring to FIG. 9, the controller 180 can display a card information screen displaying card information on at least one card of a user on the display unit 151. For example, the controller 180 can display on the display unit 151 a first card image 301, a second card image 302, a third card image 303, a fourth card image 304, and a fifth card image 305 which respectively correspond to a plurality of cards of the user.

The controller 180 can also arrange and display the first to fifth card images 301 to 305 around a virtual ellipse 400. Herein, the first card image 301 can be an image corresponding to a first card, the second card image 302 can be an image corresponding to a second card, the third card image 303 can be an image corresponding to a third card, the fourth card image 304 can be an image corresponding to a fourth card, and the fifth card image 305 can be an image corresponding to a fifth card. The controller 180 can also either display or not display the virtual ellipse 400 on the display unit 151. Each of the first to fifth cards can be one of a payment card as a payment method, a point card for point rewards services, and a discount card for discount services.

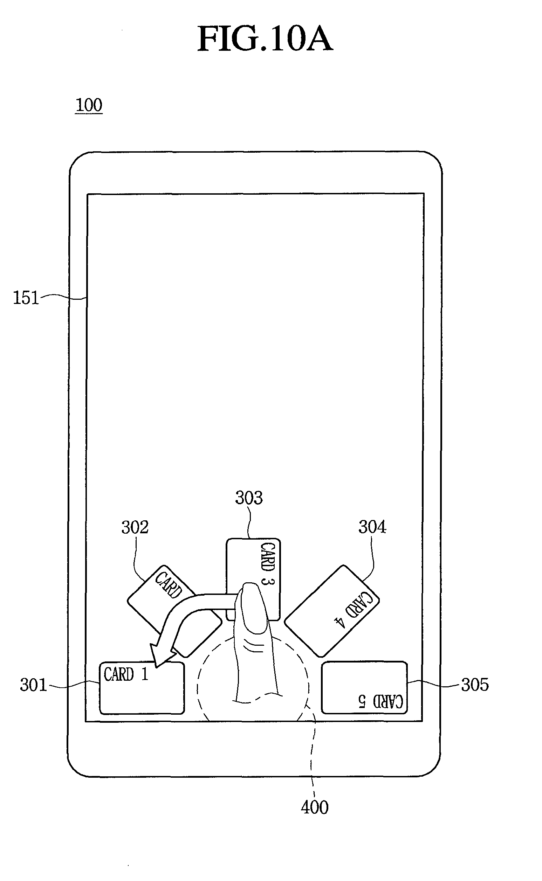

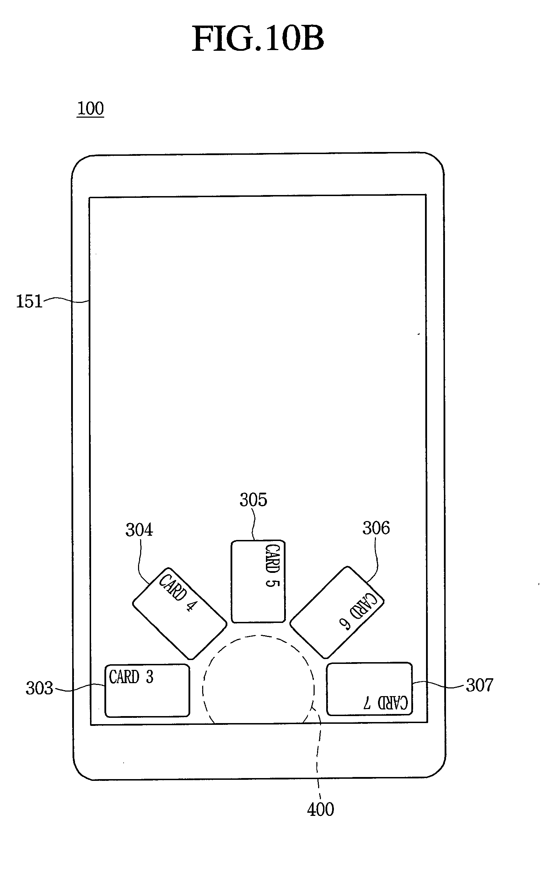

When a user input is obtained for displaying a card image which is not being displayed on the display unit 151, the controller 180 can display another card image according to the obtained user input. A description of this will be provided below with reference to FIGs. 10A and 10B. In particular, FIGs. 10A and 10B illustrate switching displayed card images according to an embodiment of the present invention.

Referring to FIG. 10A, the controller 180 can obtain a user input for rotating the third card image 303 counter-clockwise, which is one of the first to fifth card images 301 to 305 displayed on the display unit 151. Herein, the user input for rotating the third card image 303 counter-clockwise can be a user input dragging the third card image 303 counter-clockwise with respect to the virtual ellipse 400. Accordingly, as illustrated in FIG. 10B, the controller 180 can not display the first and second card images 301 and 302 which have been displayed on the display unit 151, but display sixth and seventh card images 306 and 307, i.e., new images. Thus, the controller 180 can display the third to seventh card images 303 to 307 on the display unit 151.

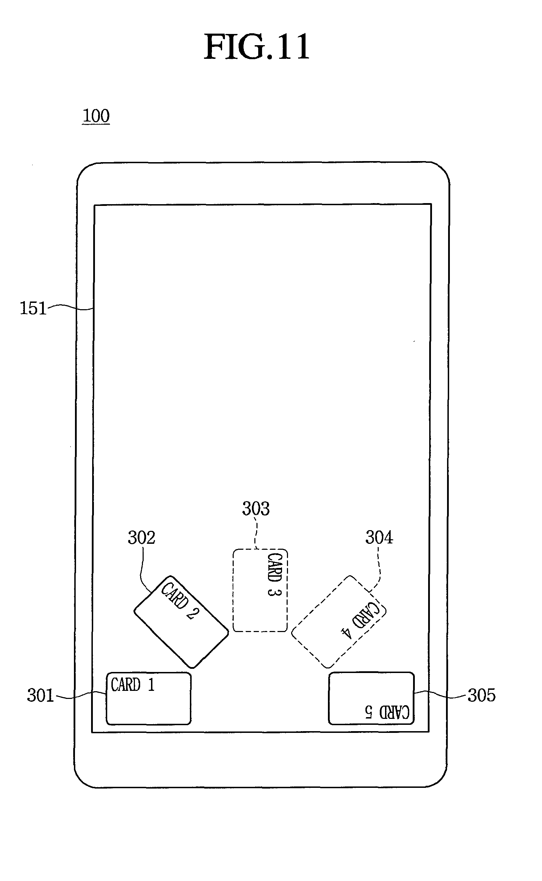

Based on the obtained store information, the controller 180 can also display card information on at least one card available in a store of cards of a user on the display unit 151. A description will be provided below with reference to FIG. 11. In particular, FIG. 11 illustrates a card image display according to availability according to an embodiment of the present invention. Referring to FIG. 11, based on the obtained store information, the controller 180 can differentiate cards available in a store in which the payment terminal 200 (which has transmitted a store recognition signal) is located, from cards unavailable in the store, from among at least one card of a user.

That is, the controller 180 can differently display cards available in a store from cards unavailable in the store on the display unit 151. For example, as illustrated in FIG. 11, the controller 180 can display the first, second and fifth card images 301, 302 and 305 which respectively correspond to the first, second and fifth cards available in a store, in enabled states on the display unit 151, and display the third and fourth card images 303 and 304 which respectively correspond to the third and fourth cards unavailable in the store, in disabled states on the display unit 151.

Also, the controller 180 can display only card images corresponding to cards available in a store on the display unit 151. Further, the controller 180 can display a warning message indicating no available card on the display unit 151. The controller 180 can also control the alarm unit 153 to generate a vibration indicating no available card exists. For example, the alarm unit 153 can generate a second vibration indicating no available card exists. Herein, the second vibration can be a vibration vibrating in a second intensity level for a second period of time.

In addition, the controller 180 can display, on one screen, at least one card belonging to the same type or category when displaying card information on cards of a user on the display unit 151. Further, the controller 180 can resize displayed card images, according to a user input dragging at least one card image displayed on the display unit 151 in one direction. For example, the controller 180 can enlarge at least one card image displayed on the display unit 151 according to a user input dragging at least one card image of a plurality of card images displayed on the display unit 151 toward the top of the display unit 151. Also, the controller 180 can reduce at least one card image displayed on the display unit 151 according to a user input dragging at least one card image of a plurality of card images displayed on the display unit 151 toward the bottom of the display unit 151.

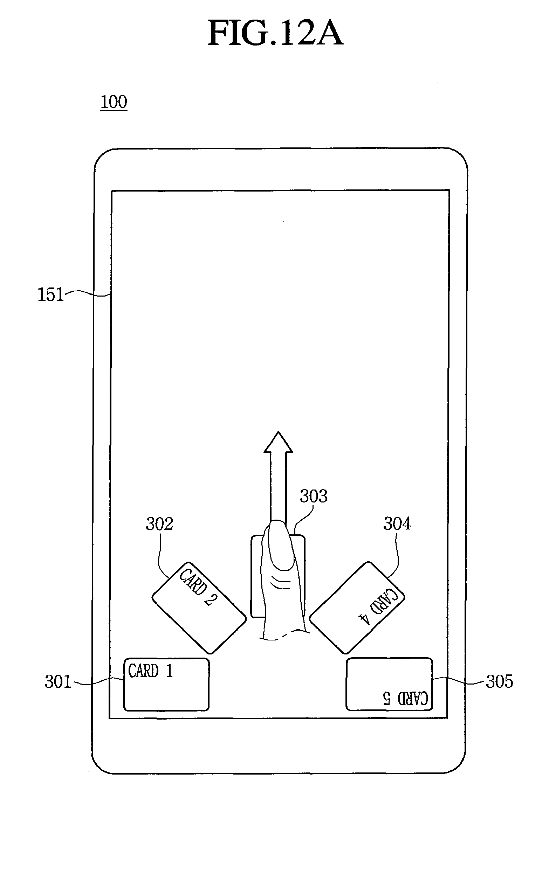

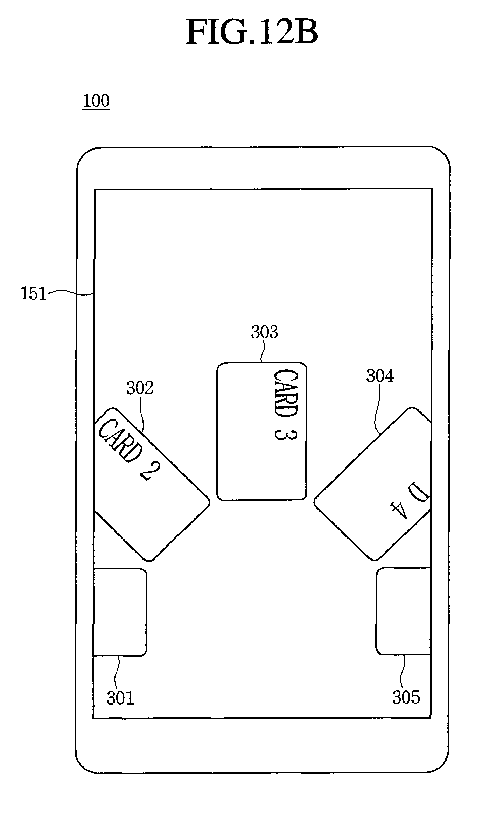

Furthermore, the controller 180 can move at least one displayed card image to a position corresponding to a user input dragging the image. A description will now be provided with reference to FIGs. 12A and 12B. In particular, FIGs. 12A and 12B illustrate resizing of card images according to an embodiment of the present invention.

Referring to FIG. 12A, the controller 180 can obtain a user input dragging the third card image 303 (which is one of the plurality of card images 301 to 305 displayed in a first size on the display unit 151) toward the top of the display unit 151. Accordingly, as illustrated in FIG. 12B, the controller 180 can move and display the plurality of card images 301 to 305 toward the top, according to a dragged position. In addition, the controller 180 can display the plurality of card images 301 to 305 in a third size on the display unit 151 according to a dragged distance. Herein, the third size can be larger than the first size.

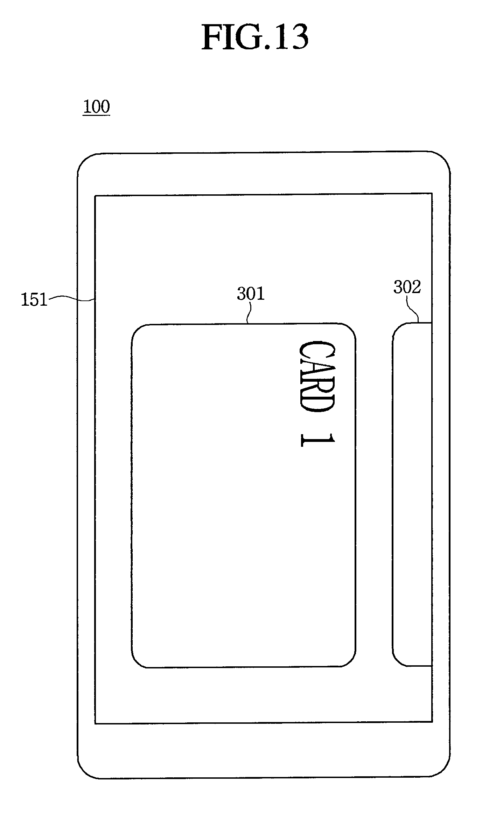

Another embodiment of card image displaying will now be described with reference to FIG. 13. In particular, FIG. 13 illustrates a card image displaying screen according to another embodiment of the present invention. Referring to FIG. 13, the controller 180 can display a card information screen displaying card images of at least one card of a user on the display unit 151. In addition, the controller 180 can display card images respectively corresponding to a plurality of cards of a user in a longitudinal direction on the display unit 151.

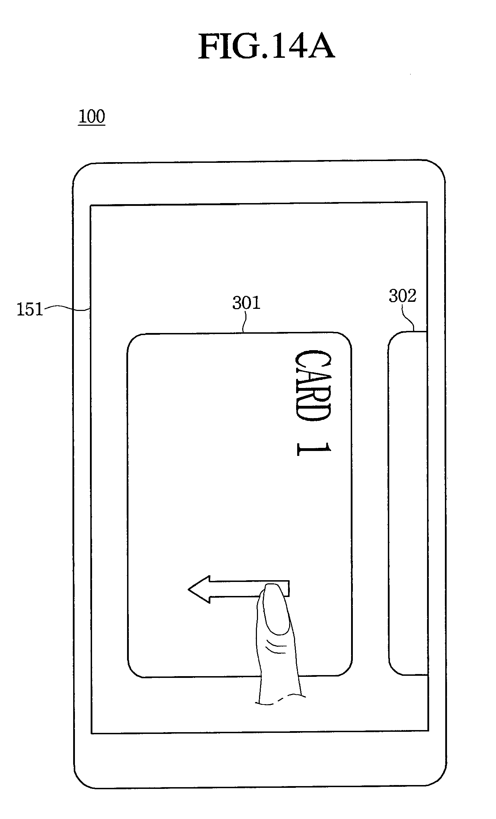

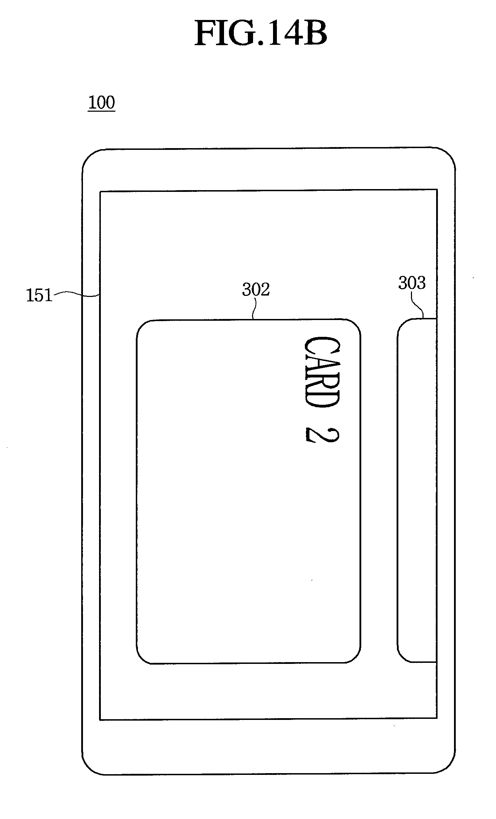

For example, the controller 180 can display the first card image 301 in a longitudinal direction on the display unit 151, and can also display a partial image of the second card image 302 on a portion of a right region in the display unit 151. When a user input is obtained in which card images displayed on the display unit 151 are swiped, the controller 180 can display other card image which is not being displayed on the display unit 151, according to the obtained user input. A description will be provided below with reference to FIGs. 14A and 14B.

In particular, FIGs. 14A and 14B illustrate switching displayed card images according to another embodiment of the present invention. Referring to FIG. 14A, the controller 180 can obtain a user input swiping the first card image 301 displayed on the display unit 151 to the left. Accordingly, as illustrated in FIG. 14B, the controller 180 can display the second card image 302 on the display unit 151. Further, when a user input is obtained in which the second card image 302 displayed on the display unit 151 is swiped to the right, the controller 180 can also display again the first card image 301 on the display unit 151.

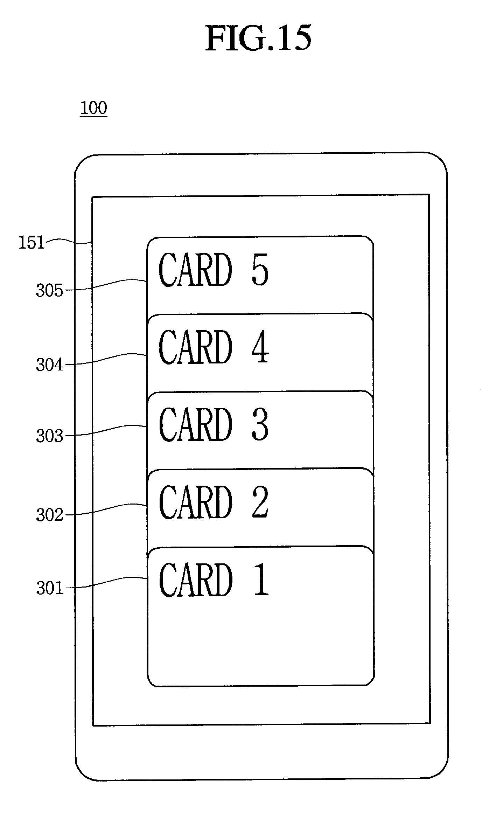

Still another embodiment of displaying card information will be described with reference to FIG. 15. In particular, FIG. 15 illustrates a card image displaying screen according to another embodiment of the present invention. Referring to FIG. 15, the controller 180 can display a card information screen displaying card information on at least one card of a user on the display unit 151. In addition, the controller 180 can display on the display unit 151 the first to fifth card images 301 to 305 respectively corresponding to a plurality of cards of a user, with some areas of each of the card images overlapping each other. When a user input is obtained for selecting one card image of a plurality of card images displayed on the display unit 151, the controller 180 can also display, on the top, the selected card image of the plurality of card images overlapping each other.

Based on the obtained store information, the controller 180 can display a plurality of card images on the display unit 151 according to a payment sequence of the store. For example, when the specific payment sequence of the store according to the obtained store information is one of a payment card, a point card and a discount card, the controller 180 can display on the display unit 151 a plurality of card images in the sequence of a first card image, a second card image and a third card image which respectively correspond to a payment card, a point card and a discount card, according to the specific payment sequence of the store.

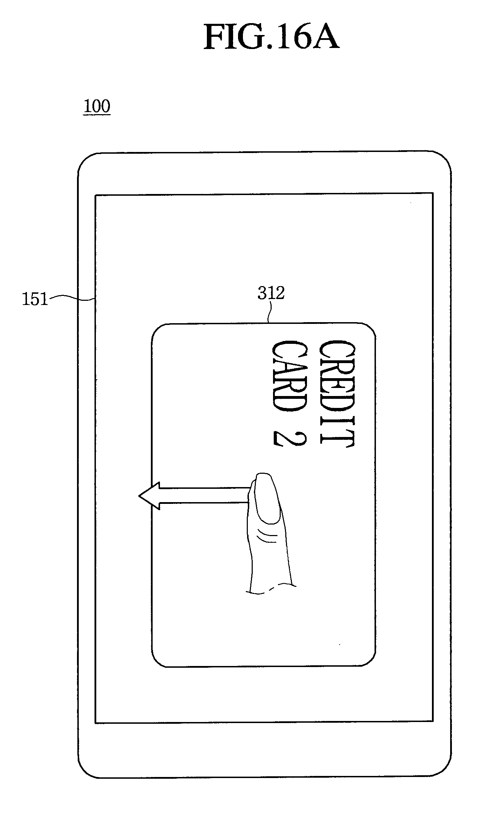

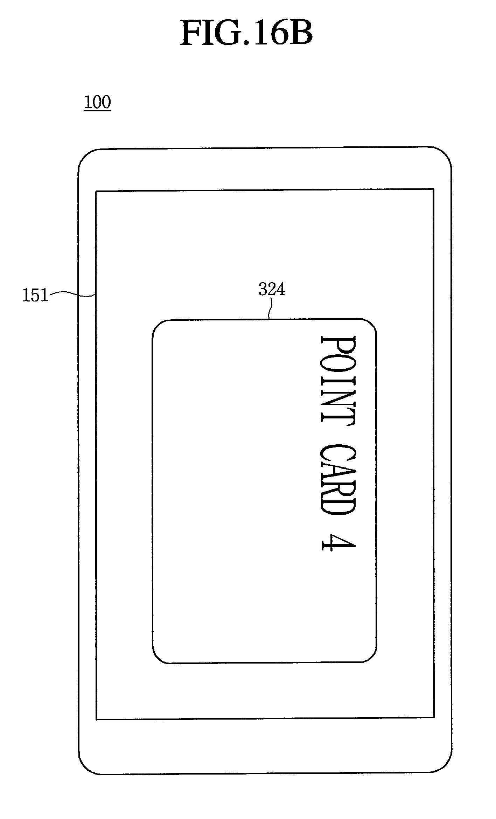

A description will be provided below with reference to FIGs. 16A to 16D. In particular, FIGs. 16A to 16D illustrate a card image display according to the specific payment sequence of a store according to an embodiment of the present invention. Referring to FIG. 16A, the controller 180 can display a second credit card image 312 as a card image of a payment card on the display unit 151, corresponding to a first step in the specific payment sequence of a store according to obtained store information. When a user input is obtained in which the second credit card image 312 displayed on the display unit 151 is swiped to the left, the controller 180 can display a card image of a point card on the display unit 151, corresponding to a second step in the specific payment sequence of the store according to the obtained store information. Accordingly, as illustrated in FIG. 16B, the controller 180 can display a fourth point card image 324 as a card image of a point card on the display unit 151.

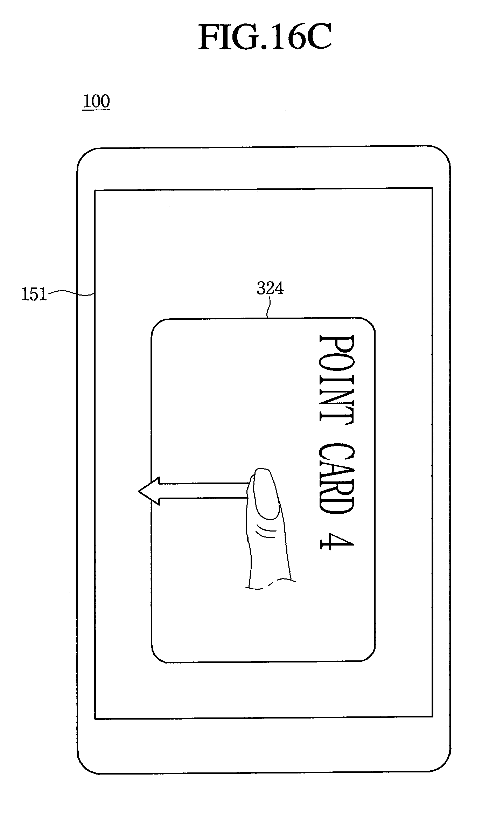

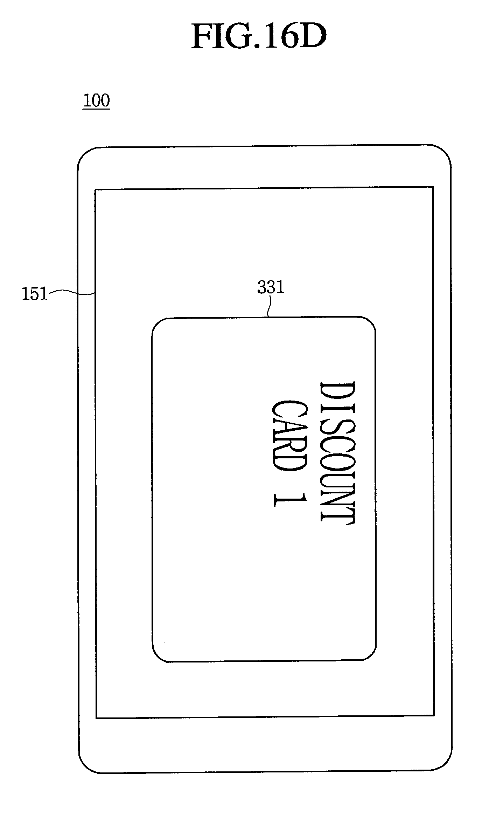

Also, as illustrated in FIG. 16C, when a user input is obtained in which the fourth point card image displayed on the display unit 151 is swiped to the left, the controller 180 can display a card image of a discount card on the display unit 151, corresponding to a third step in the specific payment sequence of the store according to the obtained store information. Accordingly, as illustrated in FIG. 16D, the controller 180 can display a first discount card image 331 as a card image of a discount card on the display unit 151. When a user input is obtained in which the displayed card image is swiped to the right, the controller 180 can display a card image corresponding to a card, corresponding to the previous step in the specific payment sequence of the store according to the obtained store information.

After a user authentication process is completed, the controller 180 can display card information on at least one card of a user on the display unit 151. For example, the controller 180 can display card information on at least one card of a user on the display unit 151 after the user authentication process has been completed through at least one of a password input or a pattern input for user authentication on the display unit 151. In addition, the controller 180 can obtain various forms of biometric information on a user through the sensor unit 140, and can display card information on at least one card of a user on the display unit 151 after completing the user authentication process based on the obtained biometric information. For example, the controller 180 can recognize a user fingerprint through the fingerprint sensor 145 and display card information on at least one card of a user on the display unit 151 after the user authentication process is completed based on the recognized fingerprint.

Referring again to FIG. 6, when a user input is obtained for payment for goods or services waiting for payment on the payment terminal 200 (S111), the controller 180 generates a payment ready signal for payment for goods or services (S113). Based on the card information displayed on the display unit 151 according to the specific payment sequence of a store according to obtained store information, the controller 180 can obtain a user input for payment for goods or services waiting for payment on the payment terminal 200.

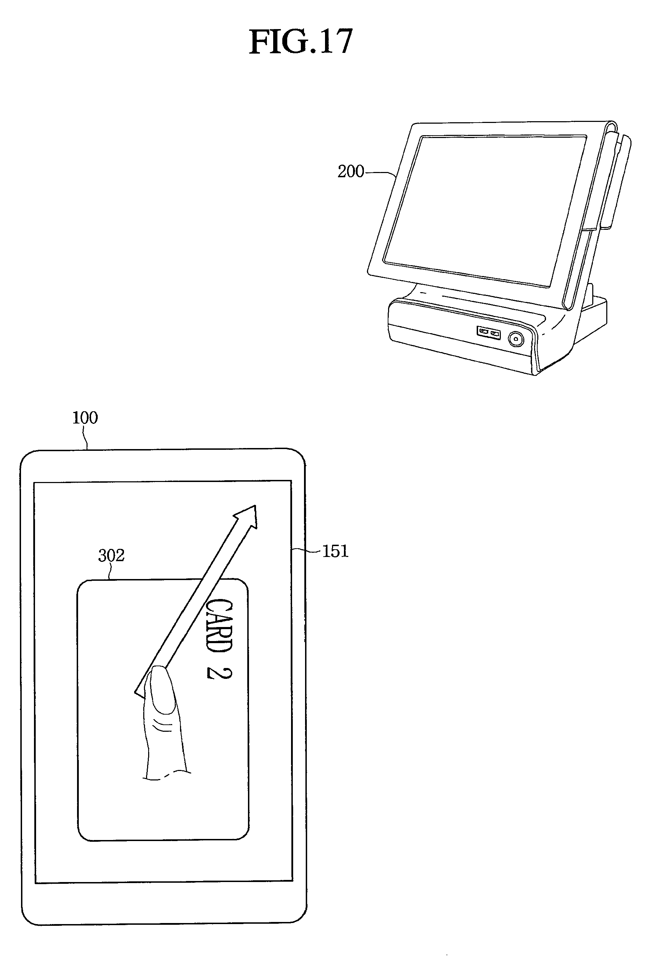

For example, the controller 180 can obtain a user input dragging and dropping a card image displayed on the display unit 151 toward the payment terminal 200, as a user input for payment for goods or services waiting for payment on the payment terminal 200. A description will be provided below with reference to FIG. 17. In particular, FIG. 17 is an illustration of a user input for payment of an embodiment.

Referring to FIG. 17, the controller 180 can obtain a user input dragging and dropping the second card image 302 displayed on the display unit 151 toward the payment terminal 200, as a user input for payment for goods or services waiting for payment on the payment terminal 200. Accordingly, the controller 180 can obtain a user input dragging and dropping the second card image 302 displayed on the display unit 151 in an upper right direction, i.e., toward the payment terminal 200, as a user input for payment for goods or services waiting for payment on the payment terminal 200.

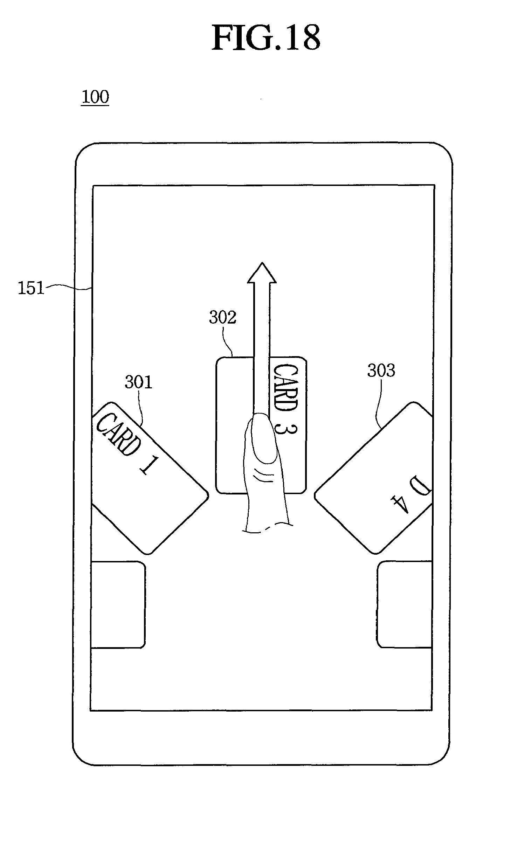

As another example, the controller 180 can obtain a user input dragging and dropping a card image displayed on the display unit 151 toward the top of the display unit 151, as a user input for payment for goods or services waiting for payment on the payment terminal 200. A description will be provided below with reference to FIG. 18. In particular, FIG. 18 is an illustration of a user input for payment of another embodiment of the present invention. Referring to FIG. 18, the controller 180 can obtain a user input dragging and dropping the second card image 302 displayed on the display unit 151 toward the top of the display unit 151, as a user input for payment for goods or services waiting for payment on the payment terminal 200.

When a user input is obtained for payment for goods or services waiting for payment on the payment terminal 200, the controller 180 can generate a payment ready signal for transmission to the payment terminal 200. Herein, the payment ready signal can be a signal for receiving, from the payment terminal 200, a response signal including information on goods or services waiting for payment and payment target information on payment amount. Furthermore, based on the response signal corresponding to the transmitted payment ready signal, the controller 180 can determine whether the terminal 100 is located within a payment possible area in which payment operation can be performed with the payment terminal 200. This will be later described.

Referring again to FIG. 6, the controller 180 in the terminal 100 transmits the generated payment ready signal to the payment terminal 200 (S115). In addition, the controller 180 can transmit the generated payment ready signal to the payment terminal 200 through the wireless communication unit 110. For example, the controller 180 can transmit the generated payment ready signal to the payment terminal 200 by at least one communication method of Bluetooth, radio frequency identification (RFID), infrared data association (IrDA), ultra wideband (UWB), ZigBee, or near field communication (NFC) through the short range communication module 114.

The controller 210 in the payment terminal 200 receives the payment ready signal transmitted through the communication unit 230, and generates a response signal for the received payment ready signal (S117). The controller 210 in the payment terminal 200 can receive the payment ready signal transmitted from the terminal 100 through the communication unit 230. Further, the controller 210 can generate a response signal for the received payment ready signal. The response signal can include information on goods or services waiting for payment on the payment terminal 200 and payment target information on payment amount. The response signal can also include a direction and a distance between the terminal 100 and the payment terminal 200.

Further, the controller 210 in the payment terminal 200 transmits the generated response signal to the terminal 100 through the communication unit 230 (S119). The controller 210 can transmit the generated response signal to the terminal 100 by at least one communication method of Bluetooth, radio frequency identification (RFID), infrared data association (IrDA), ultra wideband (UWB), ZigBee, or near field communication (NFC) through the communication unit 230.

The controller 180 in the terminal 100 then receives the response signal transmitted from the wireless communication unit 110, and determines whether the terminal 100 is located within a payment possible area based on the received response signal (S121). Based on the received response signal, the controller 180 can determine whether the terminal 100 is located within a payment possible area in which payment operation can be performed with the payment terminal 200.

According to an embodiment, based on the sensitivity or the intensity of the received response signal, the controller 180 can determine whether the terminal 100 is located within a payment possible area in which payment operation can be performed with the payment terminal 200. According to another embodiment, based on information on the direction and distance between the terminal 100 and the payment terminal 200, which is included in the received response signal, the controller 180 can determine whether the terminal 100 is located within a payment possible area in which payment operation can be performed with the payment terminal 200.

Based on the determination result of whether the terminal 100 is located within a payment possible area, the controller 180 in the terminal 100 outputs a vibration corresponding to a payment possible area (S123). When it is determined that the terminal 100 is located within a payment possible area in which payment can be performed with the payment terminal 200, the controller 180 can control the alarm unit 153 to generate a vibration indicating that the terminal 100 is located within a payment possible area. For example, the alarm unit 153 can generate a third vibration indicating that the terminal 100 is located within a payment possible area. Herein, the third vibration can be a vibration vibrating in a third intensity level for a first period of time.

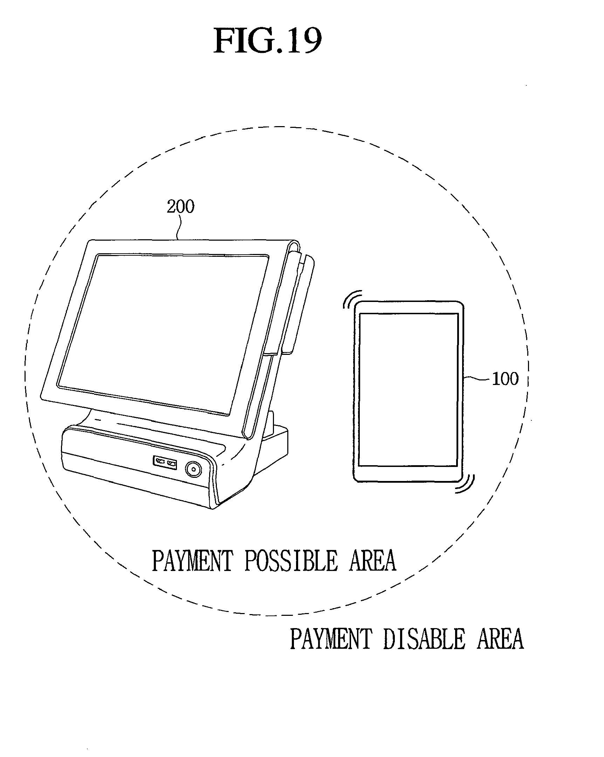

A description will be provided below with reference to FIG. 19. In particular, FIG. 19 illustrates a vibration of a terminal within a payment possible area according to an embodiment of the present invention. Referring to FIG. 19, the controller 180 in the terminal 100 can generate a third vibration indicating that the terminal 100 is located within a payment possible area when the terminal 100 is located within a payment possible area in which payment operation can be performed with the payment terminal 200.

Further, when it is determined that the terminal 100 is outside a payment possible area in which payment can be performed with the payment terminal 200, the controller 180 can control the alarm unit 153 to generate a vibration in a direction corresponding to the payment terminal 200. For example, when it is determined that the terminal 100 is located in a payment disable area, the controller 180 can control the alarm unit 153 to generate a vibration in a direction in which the payment terminal 200 is located. The controller 180 can also control the alarm unit 153 to generate a vibration with a vibration amplitude corresponding to a distance between the terminal 100 and the payment terminal 200.

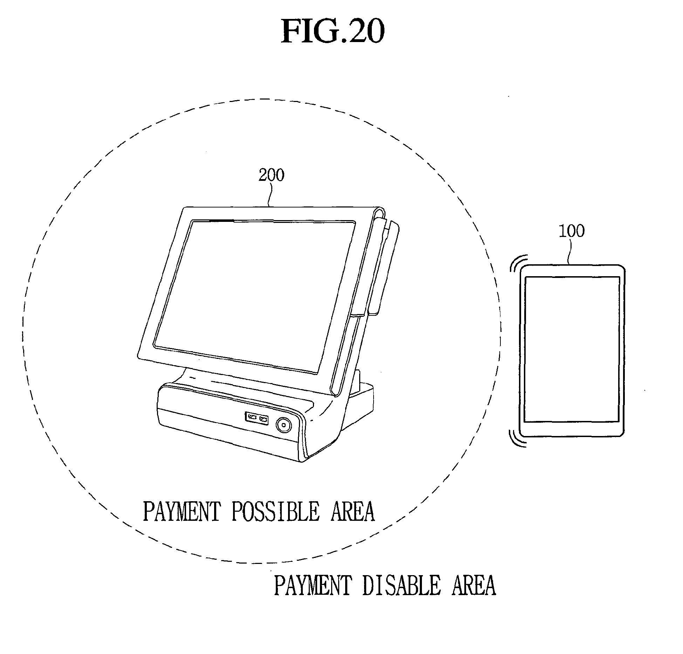

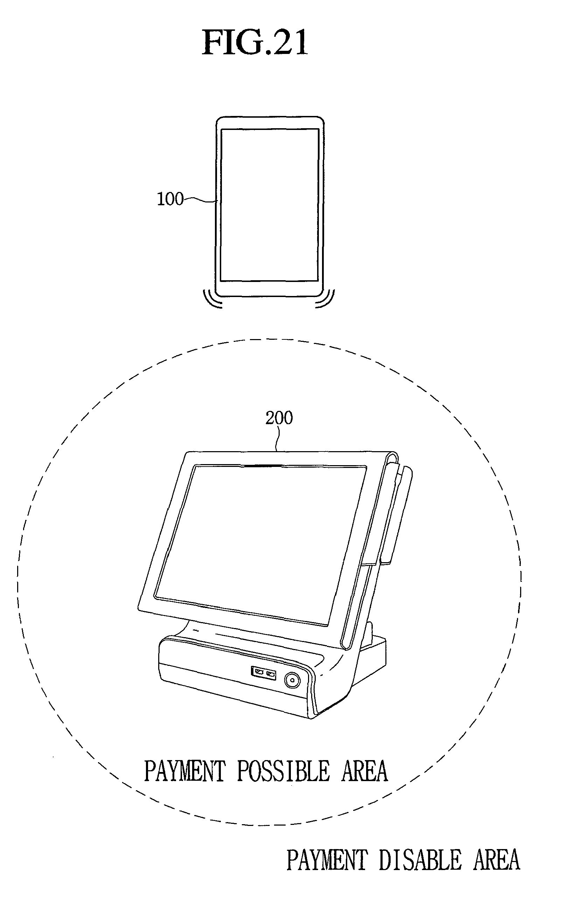

A description will be provided below with reference to FIGs. 20 and 21. In particular, FIG. 20 illustrates a vibrating operation for a payment possible area of a terminal according to an embodiment of the present invention. Referring to FIG. 20, when it is determined that the terminal 100 is located outside a payment possible area in which payment can be performed with the payment terminal 200, the controller 180 can control the alarm unit 153 to generate a vibration to the left corresponding to the payment terminal 200. The controller 180 can also control the alarm unit 153 to generate a vibration with a vibration amplitude or a frequency corresponding to a distance between the terminal 100 and the payment terminal 200.

Next, FIG. 21 illustrates a vibrating operation for a payment possible area of a terminal according to another embodiment of the present invention. Referring to FIG. 21, when it is determined that the terminal 100 is located outside a payment possible area in which payment can be performed with the payment terminal 200, the controller 180 can control the alarm unit 153 to generate a vibration in a downward direction corresponding to the payment terminal 200. In addition, the controller 180 can also control the alarm unit 153 to generate a vibration with a vibration amplitude or a frequency corresponding to a distance between the terminal 100 and the payment terminal 200.

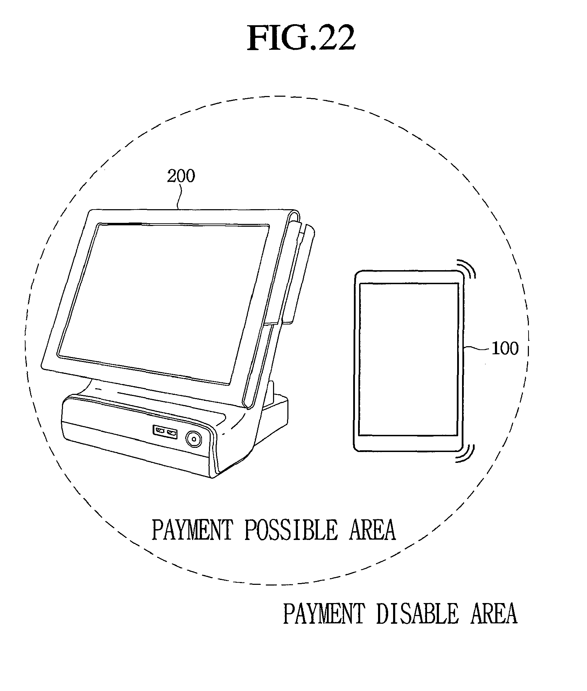

When a card corresponding to a card image displayed on the display unit 151 is not available on the payment terminal 200, the controller 180 can control the alarm unit 153 to generate a vibration in a direction opposite to a direction corresponding to the payment terminal 200. A description will be provided below with reference to FIG. 22. In particular, FIG. 22 illustrates a vibrating operation for payment inability according to an embodiment of the present invention.

Referring to FIG. 22, when it is determined that a card corresponding to a card image displayed on the display unit 151 is not available on the payment terminal 200, the controller 180 can control the alarm unit 153 to generate a vibration in a direction opposite to a direction corresponding to the payment terminal 200. When there is no available card on the payment terminal 200 from among at least one card of a user, the controller 180 can also control the alarm unit 153 to generate a vibration in a direction opposite to a direction corresponding to the payment terminal 200, as described above.

Subsequently, a description will be provided with reference to FIG. 7. Referring to FIG. 7, the controller 180 in the terminal 100 displays on the display unit 151 card information on a first card corresponding to a first payment that is a first step in the specific payment sequence of a store (S125). Based on the specific payment sequence of the payment terminal 200, the controller 180 can display a card image of a card that is to make a payment in a first payment step on the display unit 151. Also, the controller 180 can display a payment sequence window 410 for the specific payment sequence of the payment terminal 200 on the display unit 151.

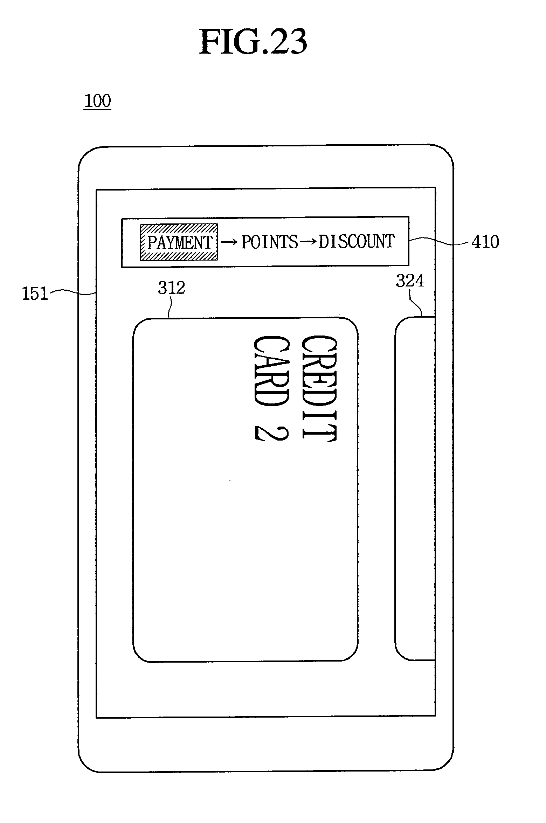

A description will be provided below with reference to FIG. 23. In particular, FIG. 23 illustrates a screen displaying a card image corresponding to a first payment according to an embodiment of the present invention. Referring to FIG. 23, the controller 180 can display a card image of a card corresponding to the first payment that is the first payment step from the specific payment sequence of a store according to the payment terminal 200 on the display unit 151. For example, when the specific payment sequence is one of a payment card, a point card, and a discount card, the controller 180 can display on the display unit 151 a second credit card image 312 that is a card image of a second credit card as a payment card corresponding to the first payment.

Also, the controller 180 can display a payment sequence window 410 on the specific payment sequence of the payment terminal 200 on the display unit 151. In addition, the controller 180 can differentiate a payment step currently being performed in the displayed payment sequence window 410 from other payment steps and display the former. For example, as illustrated in FIG. 23, the controller 180 can differentiate "payment" corresponding to a payment step currently being performed on the payment sequence window 410 displayed on the display unit 151 from "points" and "discount" in other payment steps and display the former.

In addition, the controller 180 can also display a partial image of a card image corresponding to a point card which is the next payment step in a partial region of the display unit 151. In an embodiment as illustrated in FIG. 23, the controller 180 can display on the display unit 151 a partial image of a fourth point card image 324 that is a card image of a card corresponding to a second payment that is a second payment step in the specific payment sequence of the store according to the payment terminal 200.

As shown in FIG. 7, the controller 180 in the terminal 100 generates a first payment signal for payment with card information on the displayed first card (S127). The controller 180 can generate the first payment signal using the card information on the first card corresponding to the first payment displayed on the display unit 151. The card number, the user name, the expiry date, the authentication number, etc. of the first card can be included in the first card information.

In addition, the controller 180 can generate the first payment signal after a user input is obtained for paying with card information on the first card. For example, when a user input is obtained in which a first card image displayed on the display unit 151 is swiped in the direction of the payment terminal 200 or toward the top of the display unit 151, the controller 180 can generate the first payment signal. As this has already been described above, a detailed description thereof will not be provided.

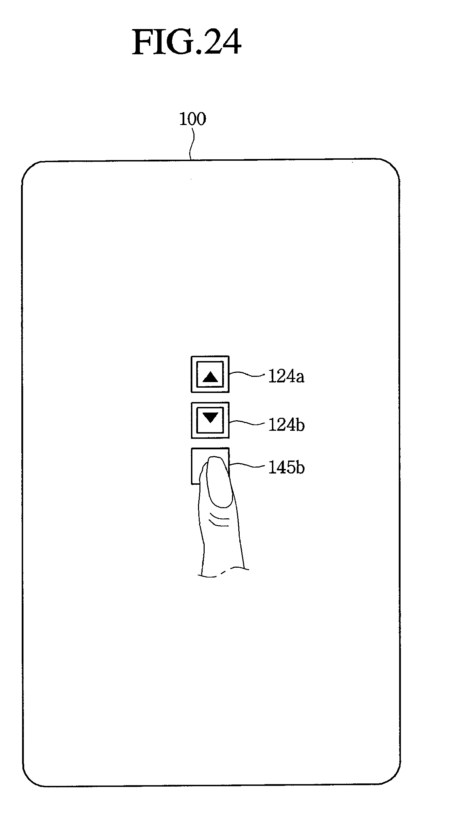

After the user authentication process is completed, the controller 180 can generate the first payment signal. For example, the controller 180 can generate the first payment signal after the user authentication process has been completed through at least one of a password input or a pattern input for user authentication on the display unit 151. Further, the controller 180 can obtain various forms of biometric information on a user through the sensor unit 140, and can generate the first payment signal after completing the user authentication process based on the obtained biometric information. For example, the controller 180 can recognize a user fingerprint through the fingerprint sensor 145 and generate the first payment signal after the user authentication process is completed based on the recognized fingerprint. A description thereof will be provided with reference to FIG. 24.

In particular, FIG. 24 illustrates user fingerprinting according to an embodiment of the present invention. Referring to FIG. 24, the controller 180 can recognize a user fingerprint through the rear fingerprint sensor 145b provided in the rear of the terminal 100. Further, the controller 180 can determine whether the recognized fingerprint is the same as a fingerprint of a first card user corresponding to a first payment. When the recognized fingerprint is the same as the fingerprint of the first card user, the controller 180 can generate a first payment signal for payment with the first card information.

Referring to FIG. 7 again, the controller 180 in the terminal 100 transmits the generated first payment signal to the payment terminal 200 (S129). Further, the controller 180 can transmit the generated first payment signal to the payment terminal 200 through the wireless communication unit 110. For example, the controller 180 can transmit the generated first payment signal to the payment terminal 200 using at least one communication method of Bluetooth, radio frequency identification (RFID), infrared data association (IrDA), ultra wideband (UWB), ZigBee, or near field communication (NFC) through the short range communication module 114.

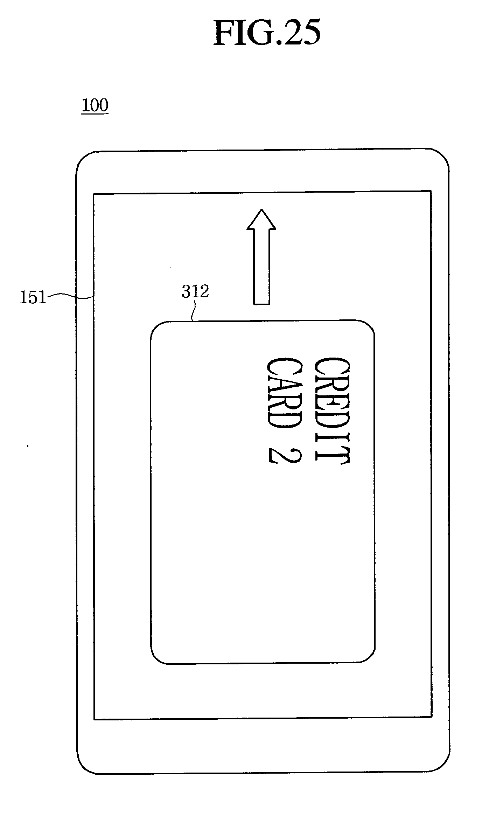

When the generated first payment signal is transmitted to the payment terminal 200, the controller 180 can display a screen in which the first card image displayed on the display unit 151 moves in a direction corresponding to the payment terminal 200 or toward the top of the display unit 151. A description thereof will be provided below with reference to FIG. 25. In particular, FIG. 25 illustrates a screen displaying the movement of a first card image according to an embodiment of the present invention. Referring to FIG. 25, when a first payment signal for a second credit card 312 corresponding to a first payment is transmitted, the controller 180 can display a screen in which the second credit card image 312 as a card image of the second credit card moves from the center of the display unit 151 toward the top thereof.

Referring again to FIG. 7, based on the first card information corresponding to the transmitted first payment signal, the controller 210 in the payment terminal 200 performs a first payment (S131). The controller 210 in the payment terminal 200 can receive the first payment signal transmitted from the terminal 100 through the communication unit 230. Based on the first card information corresponding to the first payment signal, the controller 210 can perform the first payment for goods or services to payment on the payment terminal 200.

For example, when the specific payment sequence is one of a payment card, a point card, and a discount card, the controller 210 can perform payment as the first payment for goods or services to payment on the payment terminal 200 with card information on a payment card corresponding to the transmitted first payment. When the transmitted first payment signal is card information on a second credit card, the controller 210 can perform payment for goods or services to payment with the card information on the second credit card. When the first payment is performed on the payment terminal 200, the controller 180 in the terminal 100 can also display some or all of the first card image on the top of the display unit 151.

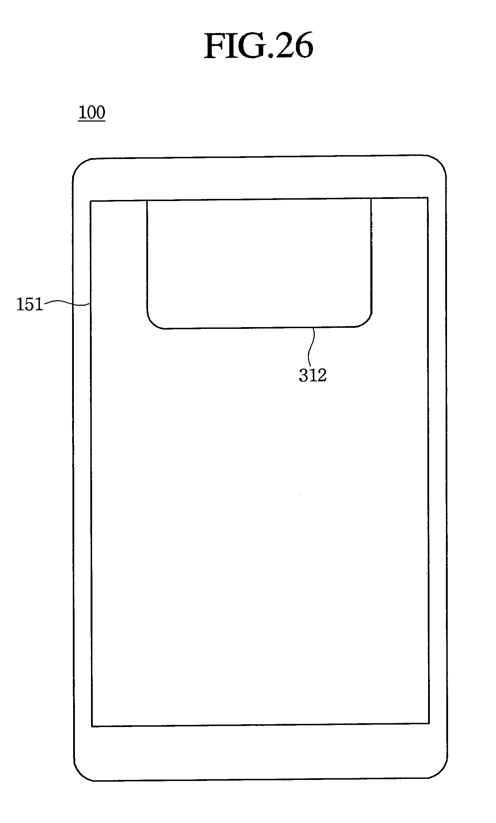

A description thereof will be provided below with reference to FIG. 26. In particular, FIG. 26 illustrates a screen displaying a first card image according to an embodiment of the present invention. Referring to FIG. 26, when the payment terminal 200 performs a first payment for a second credit card corresponding to the first payment, the controller 180 can display some or all of the second credit card image 312 as a card image of the second credit card on the top of the display unit 151. Accordingly, when the first payment signal is transmitted, a card image moved in a direction corresponding to the payment terminal 200 or toward the top of the display unit 151 can appear to stay at the moved position.

As shown in FIG. 7, the controller 210 in the payment terminal 200 generates a first payment authorization signal for the performed first payment (S133), and transmits the generated first payment authorization signal to the terminal 100 (S135). The controller 210 can generate the first payment authorization signal for a performed first payment. The first payment authorization signal can include an authorization number and authorization details on the authorized first payment. For example, the controller 180 can generate the first payment authorization signal including a card authorization number and card authorization details according to the first payment performed with card information on the second credit card.

The controller 210 can transmit the generated first payment authorization signal to the terminal 100 using at least one communication method of Bluetooth, radio frequency identification (RFID), infrared data association (IrDA), ultra wideband (UWB), ZigBee, or near field communication (NFC) through the communication unit 230. Based on the transmitted first payment authorization signal, the controller 180 in the terminal 100 displays at least one of first payment authorization details or second card information (S137). Further, the controller 180 can receive the first payment authorization signal transmitted from the payment terminal 200 through the wireless communication unit 110.

For example, the controller 180 can receive the first payment authorization signal transmitted from the payment terminal 200 through the short range communication module 114. In addition, when the first payment authorization signal is received, the controller 180 can display a screen in which the first card image displayed on the display unit 151 moves from the top of the display unit 151 to the center thereof.

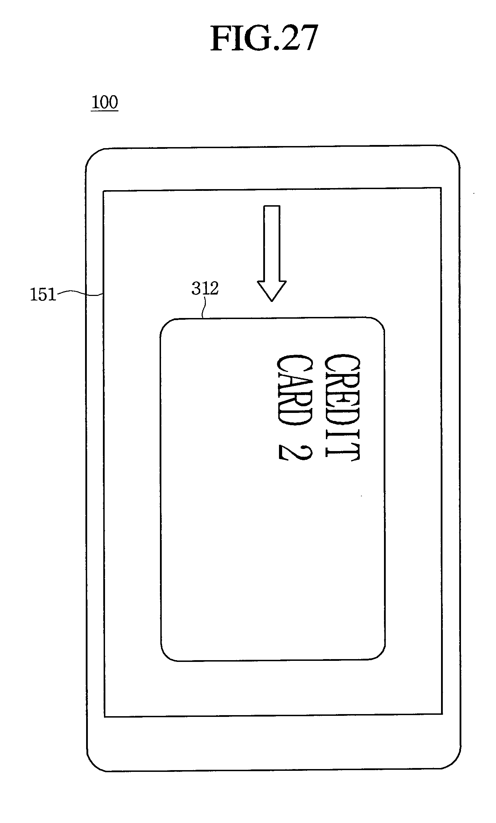

A description thereof will be provided below with reference to FIG. 27. In particular, FIG. 27 illustrates a screen displaying the movement of a first card image according to an embodiment of the present invention. Referring to FIG. 27, when a first payment authorization signal for a second credit card corresponding to a first payment is received, the controller 180 can display a screen in which the second credit card image 312 as a card image of the second credit card moves from the top of the display unit 151 to the center thereof.

Based on the received first payment authorization signal, the controller 180 can control the alarm unit 153 to generate a vibration indicating that a first payment for a first card is completed. For example, the alarm unit 153 can also generate a fourth vibration indicating that the first payment is completed. Herein, the fourth vibration can be a vibration vibrating twice in a third intensity level for a first period of time.

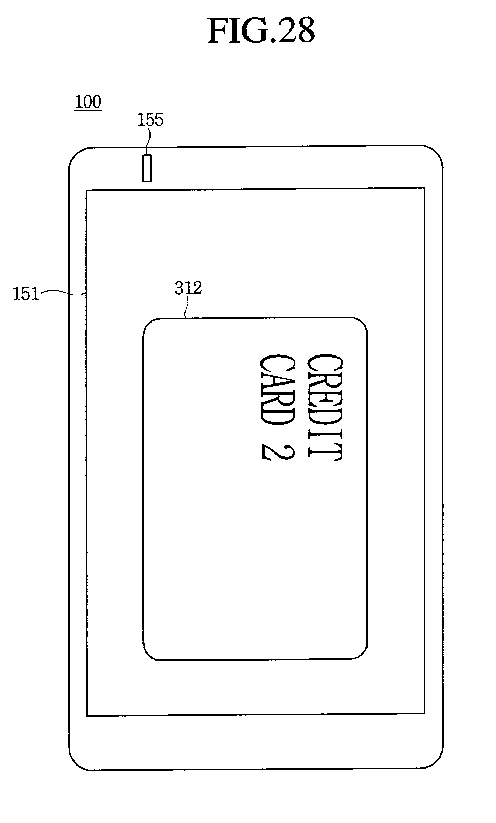

Also, based on the received first payment authorization signal, the controller 180 can control the alarm LED 155 to emit light indicating that the first payment for the first card is completed. A description thereof will be provided below with reference to FIG. 28. In particular, FIG. 28 illustrates luminescence of an alarm LED 155 according to an embodiment of the present invention. Referring to FIG. 28, based on the received first payment authorization signal, the controller 180 can control the alarm LED 155 to emit light indicating that the first payment for a second credit card as the first card is completed. For example, the alarm LED 155 can emit light with a first color indicating that the first payment is completed. Herein, the first color can be a green color. Also, the alarm LED 155 can emit light with a first pattern indicating that the first payment is completed. The first pattern can be a pattern in which light is emitted three times for a first period of time.

Further, when the first payment has not been performed, the controller 180 can control the alarm LED 155 to emit light indicating that the first payment has not been performed. For example, the alarm LED 155 can emit light with a second color indicating that the first payment has not been performed. Herein, the second color can be a red color. Also, the alarm LED 155 can emit light with a second pattern indicating that the first payment has not been performed. The second pattern can be a pattern in which light is emitted for a second period of time.

Based on the received first payment authorization signal, the controller 180 can display first payment authorization details on the display unit 151. For example, the controller 180 can display first payment authorization information for the first payment authorization details. As another example, when a user input is obtained in which the first card image displayed on the display unit 151 is swiped to the left, the controller 180 can display the first payment authorization information for the first payment authorization details.

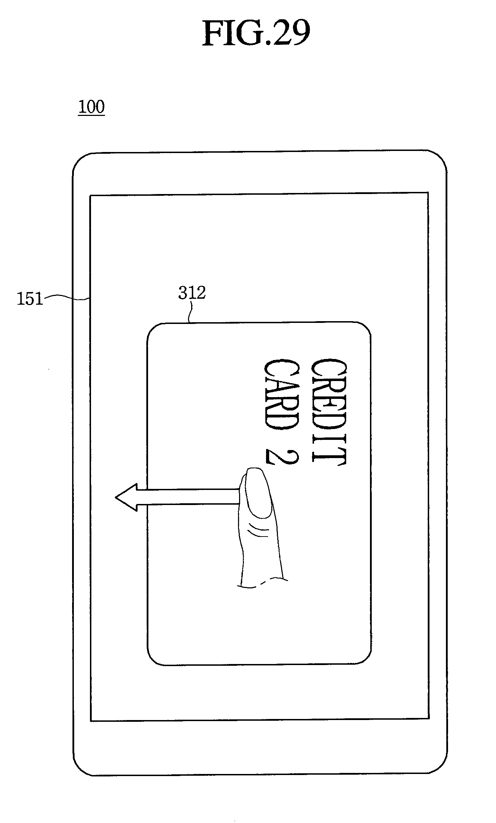

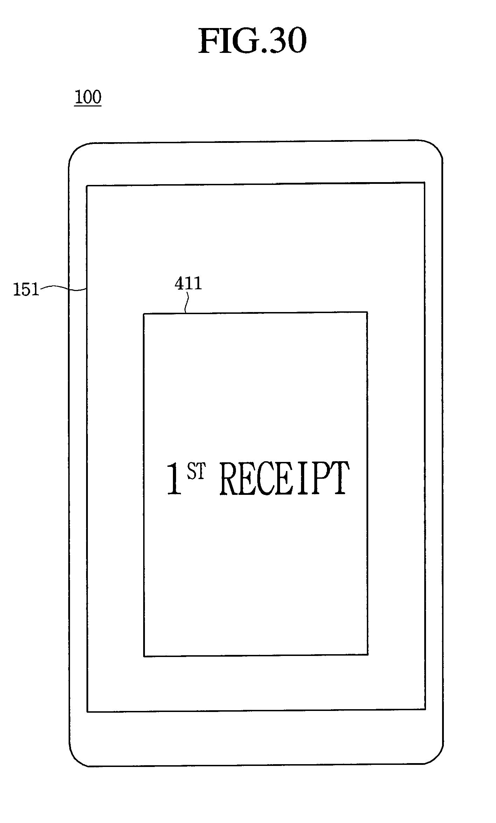

A description thereof will be provided below with reference to FIGs. 29 and 30. In particular, FIG. 29 illustrates a user input for displaying first payment authorization details according to an embodiment of the present invention, and FIG. 30 illustrates a display of first payment authorization information according to an embodiment of the present invention.

Referring to FIG. 29, the controller 180 can obtain a user input on the display unit 151 in which a second credit card image 312 of a second credit card corresponding to a first payment is swiped to the left, as a user input for displaying first payment authorization information. Also, as illustrated in FIG. 30, based on the received first payment authorization information, the controller 180 can display on the display unit 151 a first payment authorization receipt 411 displaying the first payment authorization information according to the first payment performed with the card information for the second credit card.

Based on the specific payment sequence of the payment terminal 200, the controller 180 can display a card image of a card that is to make a payment in a second payment step on the display unit 151. Also, the controller 180 can display a payment sequence window 410 for the specific payment sequence of the payment terminal 200 on the display unit 151.

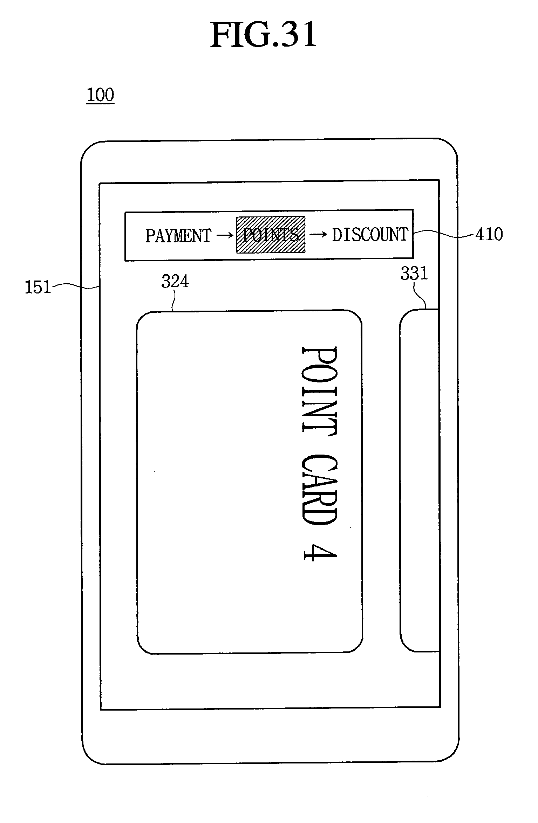

A description will be provided below with reference to FIG. 31. In particular, FIG. 31 illustrates a screen displaying a card image corresponding to a second payment according to an embodiment of the present invention. Referring to FIG. 31, the controller 180 can display a card image of a card corresponding to the second payment that is the second payment step from the specific payment sequence of a store according to the payment terminal 200 on the display unit 151. For example, when the specific payment sequence is one of a payment card, a point card, and a discount card, the controller 180 can display on the display unit 151 a fourth point card image 324 that is a card image of a fourth point card as a point card corresponding to the second payment.

Also, the controller 180 can display a payment sequence window 410 on the specific payment sequence of the payment terminal 200 on the display unit 151. In addition, the controller 180 can differentiate a payment step currently being performed in the displayed payment sequence window 410 from other payment steps and display the former. For example, as illustrated in FIG. 31, the controller 180 can differentiate "points" corresponding to a payment step currently being performed on the payment sequence window 410 displayed on the display unit 151 from "payment" and "discount" in other payment steps and display the former.

In addition, the controller 180 can also display a partial image of a card image corresponding to a discount card which is the next payment step in a partial region of the display unit 151. In an embodiment as illustrated in FIG. 31, the controller 180 can display on the display unit 151 a partial image of a first discount card image 331 that is a card image of a card corresponding to a third payment that is a third payment step in the specific payment sequence of the store according to the payment terminal 200.

Referring again to FIG. 7, the controller 180 in the terminal 100 generates a second payment signal for payment with card information on the displayed second card (S139). Further, the controller 180 can generate a second payment signal for payment with the payment terminal 200 using the card information on the second card corresponding to the second payment displayed on the display unit 151. The card number, the user name, the expiry date, the authentication number, etc. of the second card can be included in the second card information.

In addition, the controller 180 can generate a second payment signal after a user input is obtained for paying with card information on the second card. For example, when a user input is obtained in which a second card image displayed on the display unit 151 is swiped in the direction of the payment terminal 200 or toward the top of the display unit 151, the controller 180 can generate a second payment signal. As this has already been described above, a detailed description thereof will not be provided.

After the user authentication process is completed, the controller 180 can generate the second payment signal. For example, the controller 180 can generate the second payment signal after the user authentication process has been completed through at least one of a password input and a pattern input for user authentication in the display unit 151. Further, the controller 180 can obtain various forms of biometric information on a user through the sensor unit 140, and can generate the second payment signal after completing the user authentication process based on the obtained biometric information. For example, the controller 180 can recognize a user fingerprint through the fingerprint sensor 145 and generate the second payment signal after the user authentication process is completed based on the recognized fingerprint. As this has already been described above, a detailed description thereof will not be provided.

The controller 180 in the terminal 100 transmits the generated second payment signal to the payment terminal 200 (S141). In addition, the controller 180 can transmit the generated second payment signal to the payment terminal 200 through the wireless communication unit 110. For example, the controller 180 can transmit the generated second payment signal to the payment terminal 200 using at least one communication method of Bluetooth, radio frequency identification (RFID), infrared data association (IrDA), ultra wideband (UWB), ZigBee, or near field communication (NFC) through the short range communication module 114.

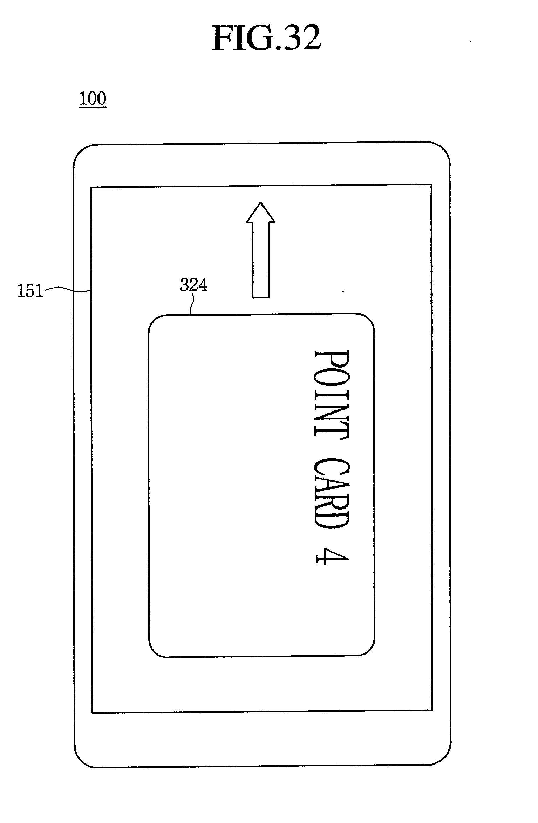

When the generated second payment signal is transmitted to the payment terminal 200, the controller 180 can display a screen in which the second card image displayed on the display unit 151 moves in a direction corresponding to the payment terminal 200 or toward the top of the display unit 151. A description thereof will be provided below with reference to FIG. 32. In particular, FIG. 32 illustrates a screen displaying the movement of a second card image according to an embodiment of the present invention. Referring to FIG. 32, when a second payment signal for a fourth point card corresponding to a second payment is transmitted, the controller 180 can display a screen in which a fourth point card image 324 as a card image of the fourth point card moves from the center of the display unit 151 toward the top thereof.

Referring to FIG. 7 again, based on the second card information corresponding to the transmitted second payment signal, the controller 210 in the payment terminal 200 performs a second payment (S143). The controller 210 in the payment can terminal 200 can receive the second payment signal transmitted from the terminal 100 through the communication unit 230.

Based on the second card information corresponding to the second payment signal, the controller 210 can perform the second payment for goods or services to payment on the payment terminal 200. For example, when the specific payment sequence is one of a payment card, a point card, and a discount card, the controller 210 can perform point earning as the second payment for goods or services to payment on the payment terminal 200 with card information on a point card corresponding to the transmitted second payment.

For example, when the transmitted second payment signal is card information on a fourth point card, the controller 210 can perform point earning for goods or services to payment with the card information on the fourth point card. When the second payment is performed on the payment terminal 200, the controller 180 in the terminal 100 can also display some or all of the second card image on the top of the display unit 151.

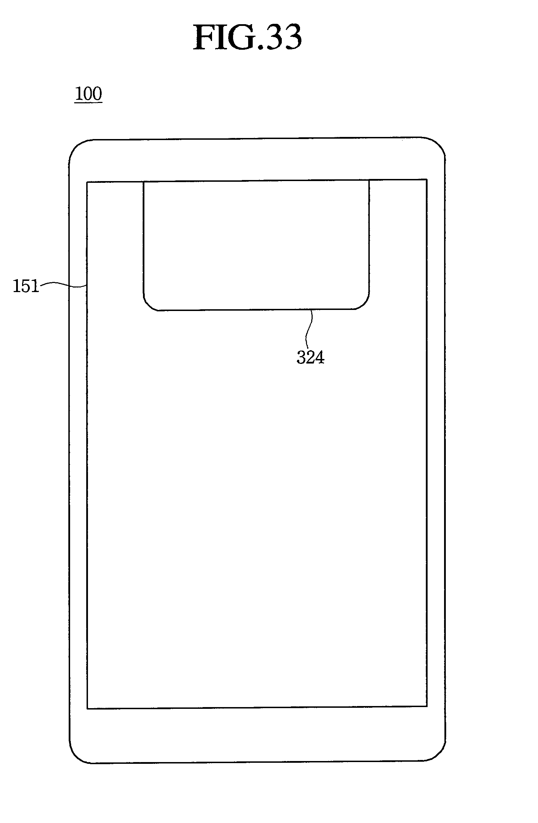

A description thereof will be provided below with reference to FIG. 33. In particular, FIG. 33 illustrates a screen displaying a second card image according to an embodiment of the present invention. Referring to FIG. 33, when the payment terminal 200 performs a second payment for a fourth point card corresponding to the second payment, the controller 180 can display some or all of the fourth point card image 324 as a card image of the fourth point card on the top of the display unit 151. Accordingly, when the second payment signal is transmitted, a card image moved in a direction corresponding to the payment terminal 200 or toward the top of the display unit 151 can appear to stay at the moved position.

Referring again to FIG. 7, the controller 210 in the payment terminal 200 generates a second payment authorization signal for the performed second payment (S145), and transmits the generated second payment authorization signal to the terminal 100 (S147). The controller 210 can generate a second payment authorization signal for a performed second payment. The second payment authorization signal can include an authorization number and authorization details on the authorized second payment. For example, the controller 180 can generate a second payment authorization signal including a card authorization number and card authorization details according to the second payment performed with card information on the fourth point card.

The controller 210 can transmit the generated second payment authorization signal to the terminal 100 using at least one communication method of Bluetooth, radio frequency identification (RFID), infrared data association (IrDA), ultra wideband (UWB), ZigBee, or near field communication (NFC) through the communication unit 230. Based on the transmitted second payment authorization signal, the controller 180 in the terminal 100 displays at least one of second payment authorization details or third card information (S149).

In addition, the controller 180 can receive the second payment authorization signal transmitted from the payment terminal 200 through the wireless communication unit 110. For example, the controller 180 can receive the second payment authorization signal transmitted from the payment terminal 200 through the short range communication module 114. In addition, when the second payment authorization signal is received, the controller 180 can display a screen in which the second card image displayed on the display unit 151 moves from the top of the display unit 151 to the center thereof.

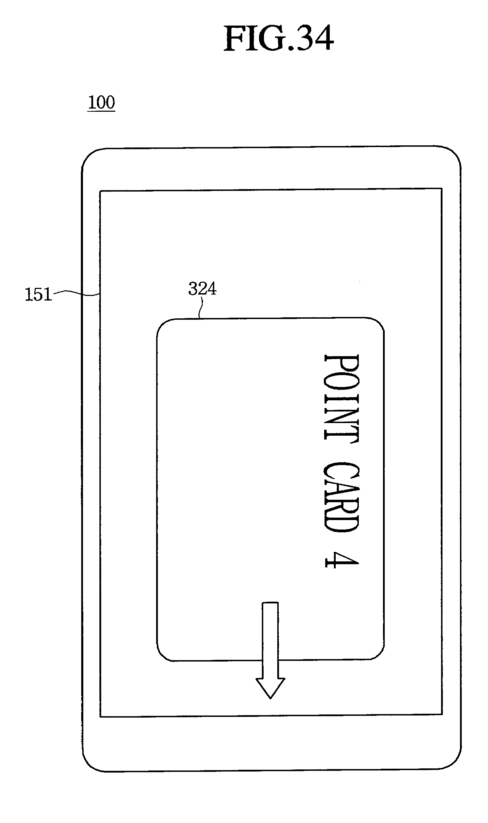

A description thereof will be provided below with reference to FIG. 34. In particular, FIG. 34 illustrates a screen displaying the movement of a second card image according to an embodiment of the present invention. Referring to FIG. 34, when a second payment authorization signal for a fourth point card corresponding to a second payment is received, the controller 180 can display a screen in which the fourth point card image 324 as a card image of the fourth point card moves from the top of the display unit 151 to the center thereof.

Based on the received second payment authorization signal, the controller 180 can control the alarm unit 153 to generate a vibration indicating that a second payment for a second card is completed. For example, the alarm unit 153 can also generate a fourth vibration indicating that the second payment is completed. Herein, the fourth vibration can be a vibration vibrating twice in a third intensity level for a first period of time. As another example, the alarm unit 153 can generate a fifth vibration indicating that the second payment is completed. Herein, the fifth vibration can be a vibration vibrating three times in the third intensity for the first period of time.

Also, based on the received second payment authorization signal, the controller 180 can control the alarm LED 155 to emit light indicating that the second payment for the second card is completed. As this has already been described above, a detailed description thereof will not be provided. Further, when the second payment has not been performed, the controller 180 can control the alarm LED 155 to emit light indicating that the second payment has not been performed. As this has already been described above, a detailed description thereof will not be provided.

Based on the received second payment authorization signal, the controller 180 can display second payment authorization details on the display unit 151. For example, the controller 180 can display second payment authorization information for the second payment authorization details. As another example, when a user input is obtained in which the second card image displayed on the display unit 151 is swiped to the left, the controller 180 can display the second payment authorization information for the second payment authorization details.

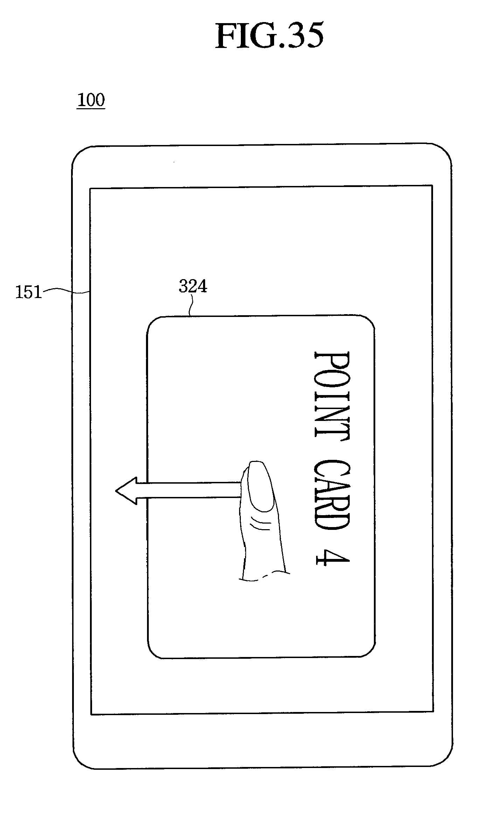

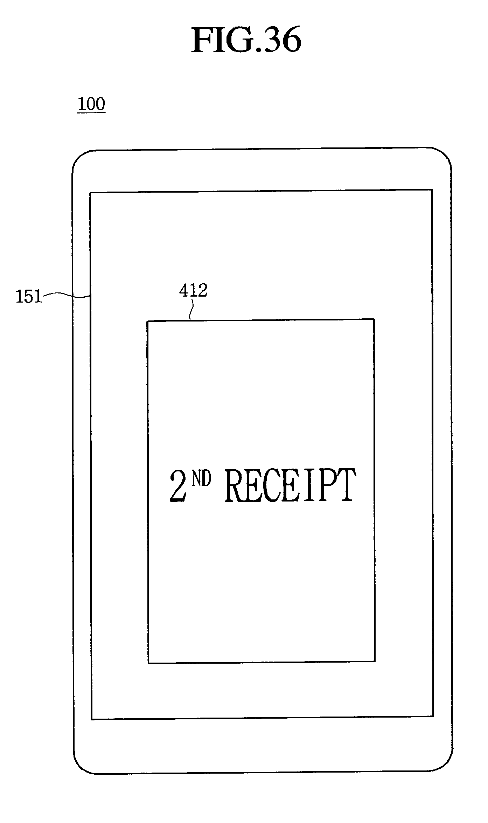

A description thereof will be provided below with reference to FIGs. 35 and 36. In particular, FIG. 35 illustrates a user input for displaying second payment authorization details according to an embodiment of the present invention, and FIG. 36 illustrates a display of second payment authorization information according to an embodiment of the present invention.

Referring to FIG. 35, the controller 180 can obtain a user input on the display unit 151 in which a fourth point card image 324 of a fourth point card corresponding to a second payment is swiped to the left, as a user input for displaying second payment authorization information. Also, as illustrated in FIG. 36, based on the received second payment authorization information, the controller 180 can display on the display unit 151 a second payment authorization receipt 412 displaying the second payment authorization information according to the second payment performed with the card information for the fourth point card.

Based on the specific payment sequence of the payment terminal 200, the controller 180 can display a card image of a card that is to make a payment in a third payment step on the display unit 151. Also, the controller 180 can display a payment sequence window 410 for the specific payment sequence of the payment terminal 200 on the display unit 151.

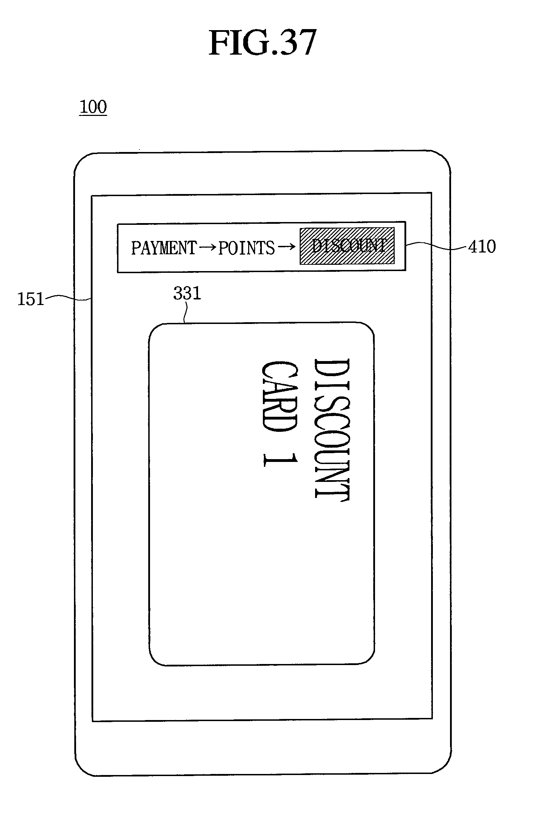

A description will be provided below with reference to FIG. 37. In particular, FIG. 37 illustrates a screen displaying a card image corresponding to a third payment according to an embodiment of the present invention. Referring to FIG. 37, the controller 180 can display a card image of a card corresponding to the third payment that is the third payment step from the specific payment sequence of a store according to the payment terminal 200 on the display unit 151. For example, when the specific payment sequence is one of a payment card, a point card, and a discount card, the controller 180 can display on the display unit 151 a first discount card image 331 that is a card image of a first discount card as a point card corresponding to the third payment.

Also, the controller 180 can display a payment sequence window 410 on the specific payment sequence of the payment terminal 200 on the display unit 151. In addition, the controller 180 can differentiate a payment step currently being performed in the displayed payment sequence window 410 from other payment steps and display the former. For example, as illustrated in FIG. 37, the controller 180 can differentiate "discount" corresponding to a payment step currently being performed on the payment sequence window 410 displayed on the display unit 151 from "payment" and "points" in other payment steps and display the former.

Referring again to FIG. 7, the controller 180 in the terminal 100 generates a third payment signal for payment with card information on the displayed third card (S151). In addition, the controller 180 can generate a third payment signal for payment with the payment terminal 200 using the card information on the third card corresponding to the third payment displayed on the display unit 151. The card number, the user name, the expiry date, the authentication number, etc. of the third card can be included in the third card information.

In addition, the controller 180 can generate a third payment signal after a user input is obtained for paying with card information on the third card. For example, when a user input is obtained in which a third card image displayed on the display unit 151 is swiped in the direction of the payment terminal 200 or toward the top of the display unit 151, the controller 180 can generate a third payment signal. As this has already been described above, a detailed description thereof will not be provided.

After the user authentication process is completed, the controller 180 can generate the third payment signal. For example, the controller 180 can generate the third payment signal after the user authentication process has been completed through at least one of a password input and a pattern input for user authentication in the display unit 151. In addition, the controller 180 can obtain various forms of biometric information on a user through the sensor unit 140, and can generate the third payment signal after completing the user authentication process based on the obtained biometric information. For example, the controller 180 can recognize a user fingerprint through the fingerprint sensor 145 and generate the third payment signal after the user authentication process is completed based on the recognized fingerprint. As this has already been described above, a detailed description thereof will not be provided.

The controller 180 in the terminal 100 transmits the generated third payment signal to the payment terminal 200 (S153). In addition, the controller 180 can transmit the generated third payment signal to the payment terminal 200 through the wireless communication unit 110. For example, the controller 180 can transmit the generated third payment signal to the payment terminal 200 using at least one communication method of Bluetooth, radio frequency identification (RFID), infrared data association (IrDA), ultra wideband (UWB), ZigBee, or near field communication (NFC) through the short range communication module 114.

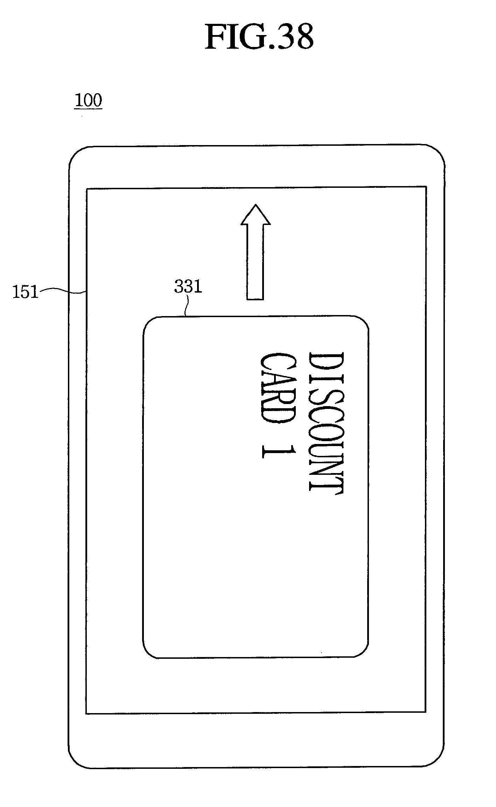

When the generated third payment signal is transmitted to the payment terminal 200, the controller 180 can display a screen in which the third card image displayed on the display unit 151 moves in a direction corresponding to the payment terminal 200 or toward the top of the display unit 151. A description thereof will be provided below with reference to FIG. 38. In particular, FIG. 38 illustrates a screen displaying the movement of a third card image according to an embodiment of the present invention.

Referring to FIG. 38, when a third payment signal for a first discount card corresponding to a third payment is transmitted, the controller 180 can display a screen in which a first discount card image 331 as a card image of the first discount card moves from the center of the display unit 151 toward the top thereof.

Referring again to FIG. 7, based on the third card information corresponding to the transmitted third payment signal, the controller 210 in the payment terminal 200 performs a third payment (S155). The controller 210 in the payment can terminal 200 can receive the third payment signal transmitted from the terminal 100 through the communication unit 230.

Based on the third card information corresponding to the third payment signal, the controller 210 can perform the third payment for goods or services to payment on the payment terminal 200. For example, when the specific payment sequence is one of a payment card, a point card, and a discount card, the controller 210 can perform discount payment as the third payment for goods or services to payment on the payment terminal 200 with card information on a discount card corresponding to the transmitted third payment.

For example, when the transmitted third payment signal is card information on a first discount card, the controller 210 can perform discount payment for goods or services to payment with the card information on the first discount card. When the third payment is performed on the payment terminal 200, the controller 180 in the terminal 100 can also display some or all of the third card image on the top of the display unit 151.

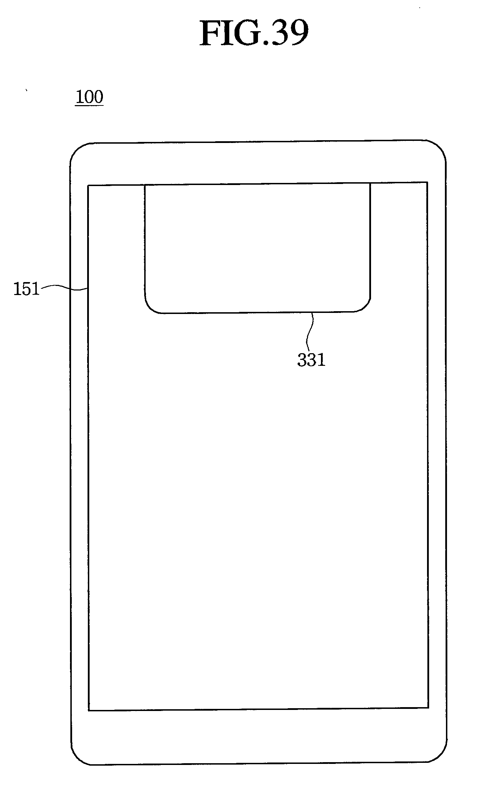

A description thereof will be provided below with reference to FIG. 39. In particular, FIG. 39 illustrates a screen displaying a third card image according to an embodiment of the present invention. Referring to FIG. 39, when the payment terminal 200 performs a third payment for a first discount card corresponding to the third payment, the controller 180 can display some or all of the first discount card image 331 as a card image of the first discount card on the top of the display unit 151. Accordingly, when the third payment signal is transmitted, a card image moved in a direction corresponding to the payment terminal 200 or toward the top of the display unit 151 can appear to stay at the moved position.

Referring again to FIG. 7, the controller 210 in the payment terminal 200 generates a third payment authorization signal for the performed third payment (S157), and transmits the generated third payment authorization signal to the terminal 100 (S159). The controller 210 can generate a third payment authorization signal for a performed third payment. The third payment authorization signal can include an authorization number and authorization details on the authorized third payment. For example, the controller 180 can generate a third payment authorization signal including a card authorization number and card authorization details according to the third payment performed with card information on the first discount card.

The controller 210 can transmit the generated third payment authorization signal to the terminal 100 using at least one communication method of Bluetooth, radio frequency identification (RFID), infrared data association (IrDA), ultra wideband (UWB), ZigBee, or near field communication (NFC) through the communication unit 230.

Based on the transmitted third payment authorization signal, the controller 180 in the terminal 100 displays third payment authorization details (S161). In addition, the controller 180 can receive the third payment authorization signal transmitted from the payment terminal 200 through the wireless communication unit 110. For example, the controller 180 can receive the third payment authorization signal transmitted from the payment terminal 200 through the short range communication module 114.

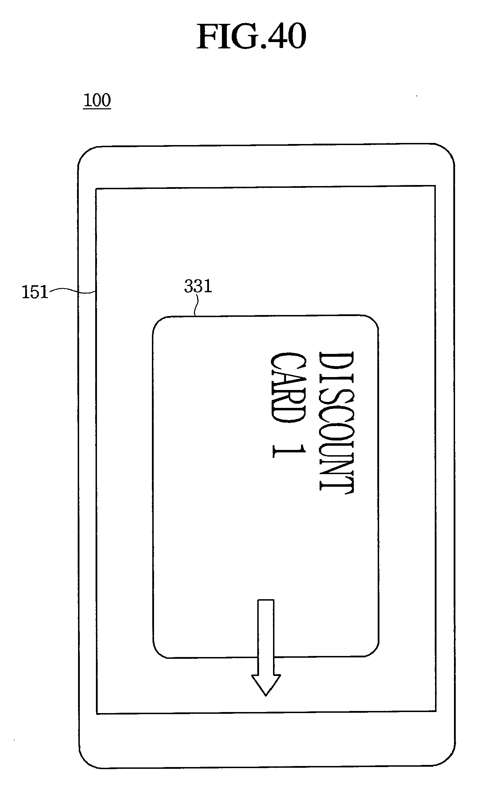

In addition, when the third payment authorization signal is received, the controller 180 can display a screen in which the third card image displayed on the display unit 151 moves from the top of the display unit 151 to the center thereof. A description thereof will be provided below with reference to FIG. 40.

In particular, FIG. 40 illustrates a screen displaying the movement of a third card image according to an embodiment of the present invention. Referring to FIG. 40, when a third payment authorization signal for a first discount card corresponding to a third payment is received, the controller 180 can display a screen in which the first card image 331 as a card image of the first discount card moves from the top of the display unit 151 to the center thereof.

Based on the received third payment authorization signal, the controller 180 can control the alarm unit 153 to generate a vibration indicating that a third payment for a third card is completed. For example, the alarm unit 153 can also generate a fourth vibration indicating that the third payment is completed. Herein, the fourth vibration can be a vibration vibrating twice in a third intensity level for a first period of time. As another example, the alarm unit 153 can generate a sixth vibration indicating that the third payment is completed. Herein, the sixth vibration can be a vibration vibrating four times in the third intensity for the first period of time.

Also, based on the received third payment authorization signal, the controller 180 can control the alarm LED 155 to emit light indicating that the third payment for the third card is completed. As this has already been described above, a detailed description thereof will not be provided. Further, when the third payment has not been performed, the controller 180 can control the alarm LED 155 to emit light indicating that the third payment has not been performed. As this has already been described above, a detailed description thereof will not be provided.

Based on the received third payment authorization signal, the controller 180 can display third payment authorization details on the display unit 151. For example, the controller 180 can display third payment authorization information for the third payment authorization details. As another example, when a user input is obtained in which the third card image displayed on the display unit 151 is swiped to the left, the controller 180 can display the third payment authorization information for the third payment authorization details.

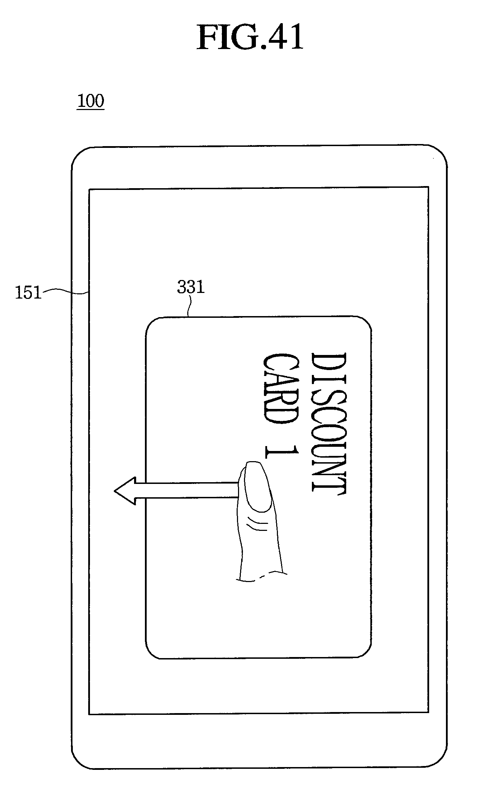

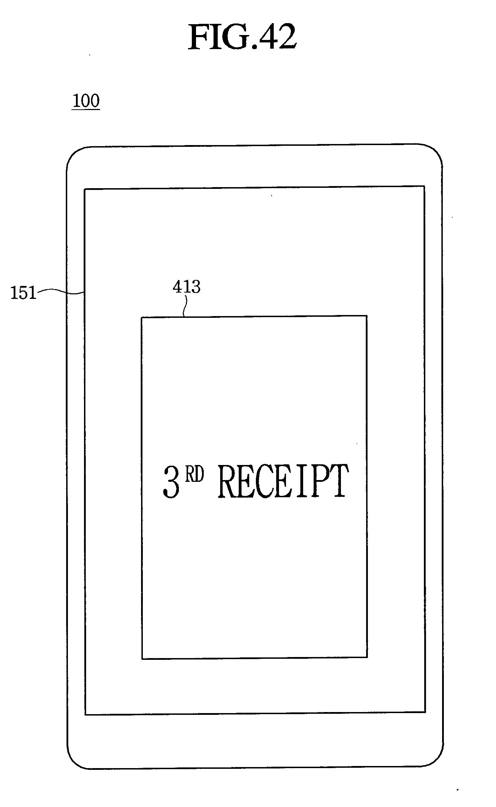

A description thereof will be provided below with reference to FIGs. 41 and 42. In particular, FIG. 41 illustrates a user input for displaying third payment authorization details according to an embodiment of the present invention, and FIG. 42 illustrates a display of third payment authorization information according to an embodiment of the present invention;

Referring to FIG. 41, the controller 180 can obtain a user input on the display unit 151 in which a first discount card image 331 of a first discount card corresponding to a third payment is swiped to the left, as a user input for displaying third payment authorization information. Also, as illustrated in FIG. 42, based on the received third payment authorization information, the controller 180 can display on the display unit 151 a third payment authorization receipt 413 displaying the third payment authorization information according to the third payment performed with the card information for the first discount card.

Referring again to FIG. 7, the controller 180 in the terminal 100 stores payment authorization details of which the payment is completed (S163). In addition, the controller 180 can store payment authorization details for at least one of the first to third payment authorization details in the memory 160. When the payment terminal 200 sequentially receives a plurality of payment signals each of which corresponds to each piece of card information on a plurality of cards and performs payment for each of the plurality of received payment signals, the controller 180 in the terminal 100 can control the alarm unit 153 to generate a vibration indicating that payment is completed whenever payment for each of the plurality of cards is completed.

For example, the alarm unit 153 can vibrate once when a first payment is completed, vibrate twice when a second payment is completed, and vibrate three times when a third payment is completed. Also, the controller 180 can control the alarm LED 155 to emit light whenever payment for each of the plurality of cards is completed. For example, the controller 180 can control the alarm LED 155 to emit light once when a first payment is completed, control the alarm LED 155 to emit light twice when a second payment is completed, and control the alarm LED 155 to emit light three times when a third payment is completed.

The controller 180 in the terminal 100 can also display card images corresponding to a plurality of cards belonging to different types and different categories on one screen of the display unit 151. For example, the controller 180 can display on the display unit 151 a plurality of card images corresponding to a plurality of cards corresponding to a payment card, a point card, and a discount card, respectively.

Based on the obtained store information, the controller 180 can also display a plurality of card images according to a payment sequence of a store. For example, when the payment sequence of the store is one of a payment card, a point card, and a discount card, the controller 180 can display a card image corresponding to the payment card on a left region of the display unit 151, display a card image corresponding to the point card on a center region thereof, and display a card image corresponding to the discount card on a right region thereof.

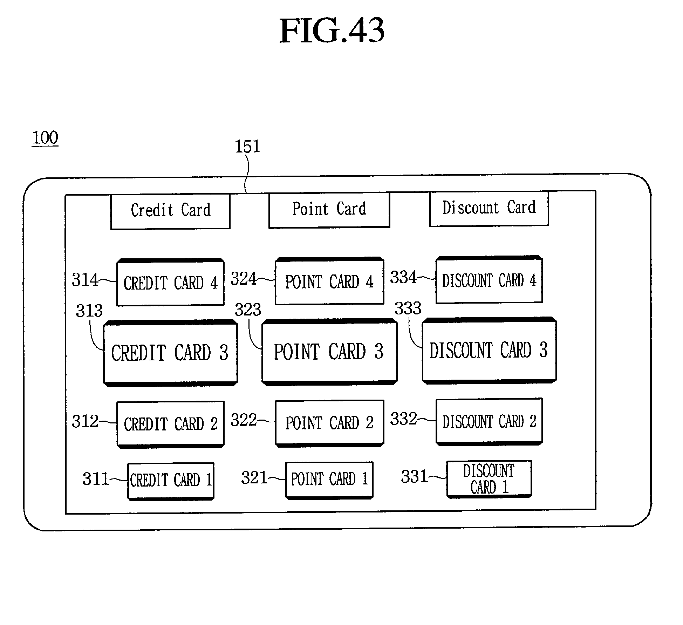

A description thereof will be provided below with reference to FIG. 43. In particular, FIG. 43 illustrates a card image displaying screen according to another embodiment of the present invention. Referring to FIG. 43, the controller 180 can display first, second, third and fourth credit card images 311, 312, 313 and 314 corresponding to payment cards, can display first, second, third and fourth point card images 321, 322, 323 and 324 corresponding to point cards, and can display first, second, third and fourth discount card images 331, 332, 333 and 334 corresponding to discount cards, on the display unit 151.

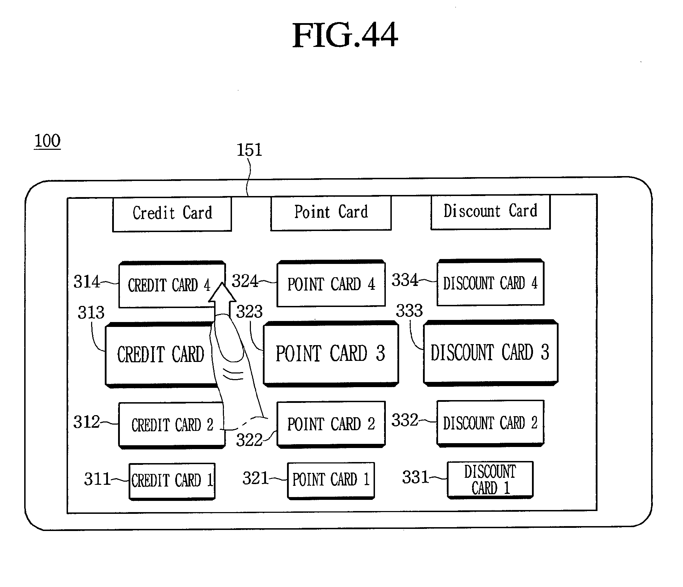

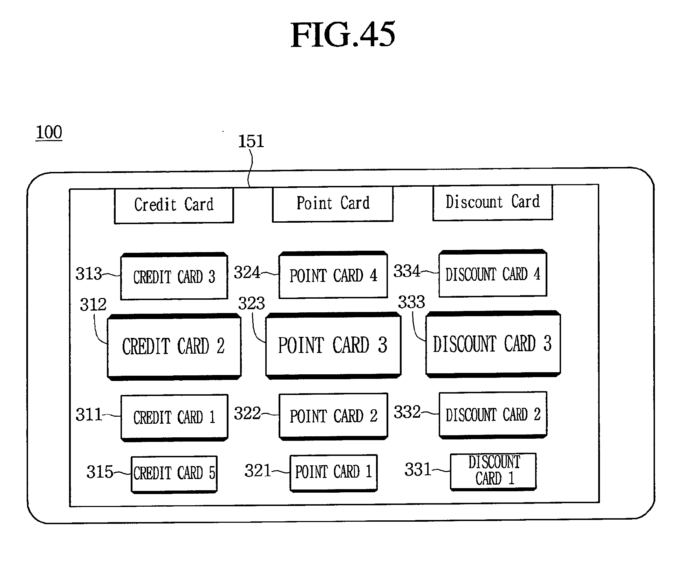

Based on a user input for a plurality of card images displayed on the display unit 151, the controller 180 can change positions of the plurality of displayed card images. A description thereof will be provided below with reference to FIGs. 44 and 45. In particular, FIG. 44 illustrates a user input for displacement of a card image according to an embodiment of the present invention, and FIG. 45 illustrates card images displaced by a user input according to an embodiment of the present invention.

Referring to FIG. 44, the controller 180 can obtain a user input in which a third credit card image 313 displayed on the display unit 151 is swiped toward the top. Accordingly, as illustrated in FIG. 45, the controller 180 can change display positions of a plurality of card images corresponding to credit cards displayed on the display unit 151. Accordingly, the controller 180 can display the plurality of card images in the sequence of third, second, first, and fifth credit card images 313, 312, 311 and 315, which were previously displayed in the sequence of fourth, third, second and first credit card images 314, 313, 312 and 311 on the display unit 151.

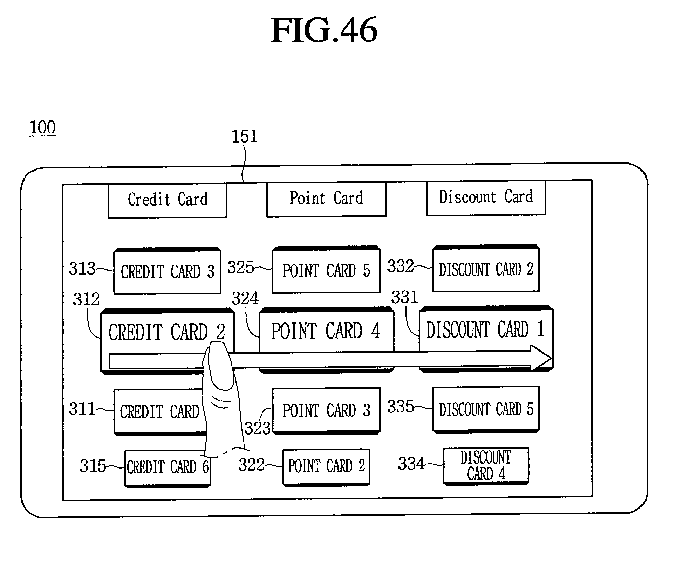

Also, the controller 180 can perform payment for a plurality of cards according to a user input for different types of a plurality of card images displayed on the display unit 151. A description thereof will be provided below with reference to FIG. 46. In particular, FIG. 46 illustrates a user input for payment for a plurality of cards according to an embodiment of the present invention;

Referring to FIG. 46, the controller 180 can display first, second, third and fourth credit card images 311, 312, 313 and 314 corresponding to payment cards, can display first, second, third and fourth point card images 321, 322, 323 and 324 corresponding to point cards, and can display first, second, third and fourth discount card images 331, 332, 333 and 334 corresponding to discount cards, on the display unit 151. the controller 180 can obtain a user input in which the second credit card image 312, the fourth point card image 324, and the first discount card image 331 displayed on the display unit 151 are sequentially swiped. Accordingly, the controller 180 can perform payment for each of the second credit card, the fourth point card, and the first discount card.

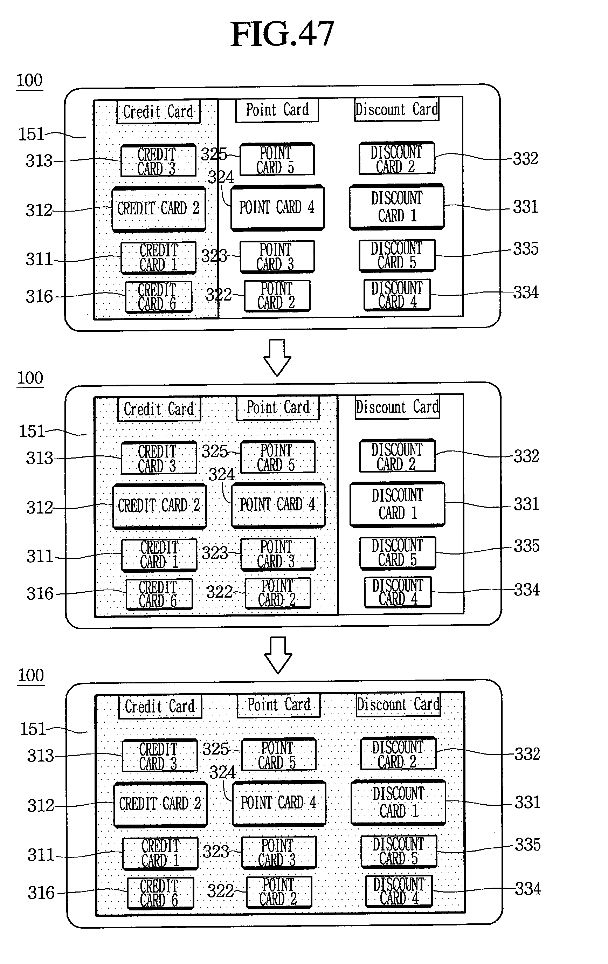

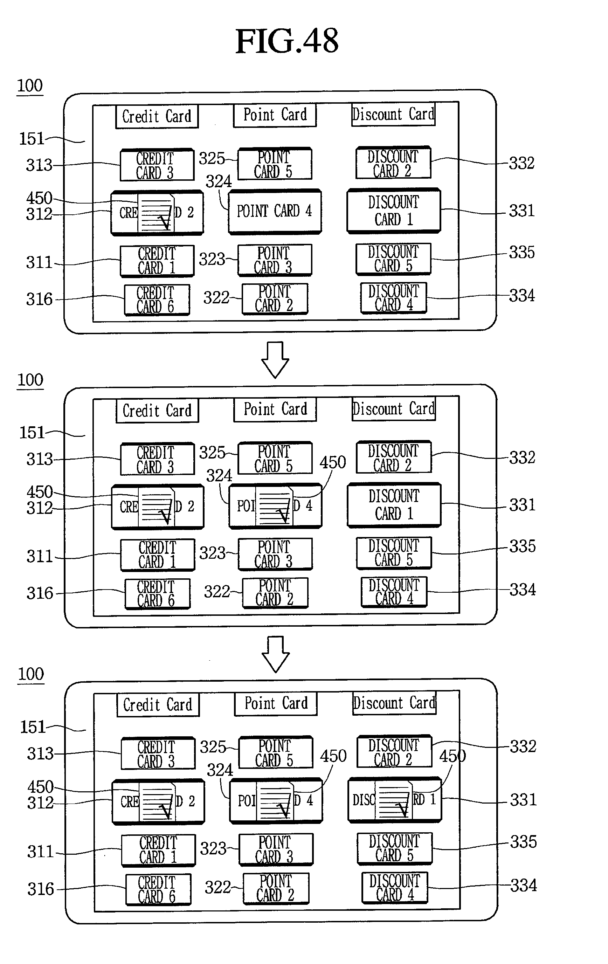

Also, during the performing of the payment for a plurality of cards, the controller 180 can display the progression according to the performing process. A description thereof will be provided below with reference to FIGs. 47 and 48. In particular, FIG. 47 illustrates a payment progression display according to an embodiment of the present invention.

Referring to FIG. 47, when payments for cards corresponding to a second credit card image 312, a fourth point card image 324, and a first discount card image 331 from among a plurality of card images displayed on the display unit 151 are sequentially performed, the controller 180 can differently display a partial region of the display unit 151 from other regions according to payment progression. When a payment for the second credit card corresponding to a credit card is completed, the controller 180 can dimly display the left region in which the second credit card image 312 is located.

When a payment for the fourth point card corresponding to a point card is completed, the controller 180 can also dimly display the center region in which the fourth point card image 324 is located. When a payment for the first discount card corresponding to a discount card is completed, the controller 180 can also dimly display the right region in which the first discount card image 331 is located. Therefore, the controller 180 can dimly display a screen of the display unit 151 on which a plurality of card images are displayed, sequentially according to payment progression.

FIG. 48 illustrates a payment progression display according to another embodiment of the present invention. Referring to FIG. 48, when payments for cards corresponding to a second credit card image 312, a fourth point card image 324, and a first discount card image 331 from among a plurality of card images displayed on the display unit 151 are sequentially performed, the controller 180 can display a payment completion indicator 450 in each card image according to payment progression. When a payment for the second credit card corresponding to a credit card is completed, the controller 180 can display the payment completion indicator 450 in the second credit card image 312.

When a payment for the fourth point card corresponding to a point card is completed, the controller 180 can display the payment completion indicator 450 in the fourth point card image 324. When a payment for the first discount card corresponding to a discount card is completed, the controller 180 can display the payment completion indicator 450 in the first discount card image 331. Therefore, the controller 180 can sequentially display the payment completion indicator in each card image of a plurality of cards that are to make payment, according to payment progression. Based on a user input for the payment completion indicator 450, the controller 180 can also display payment details corresponding to the payment completion indicator 450.

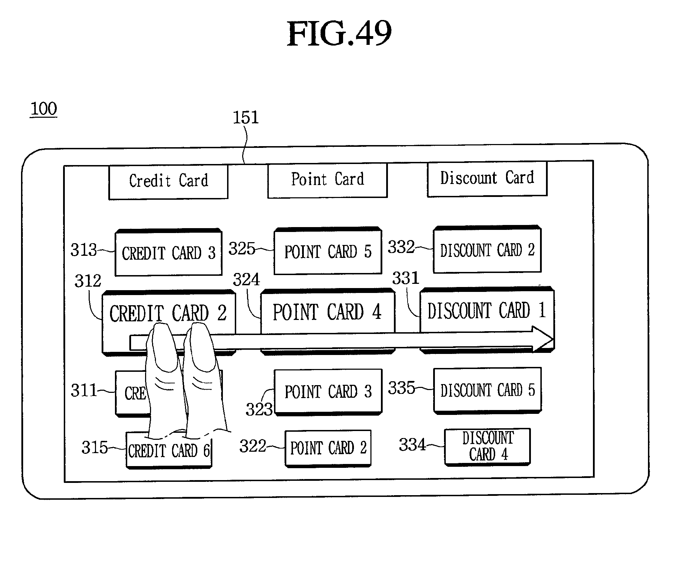

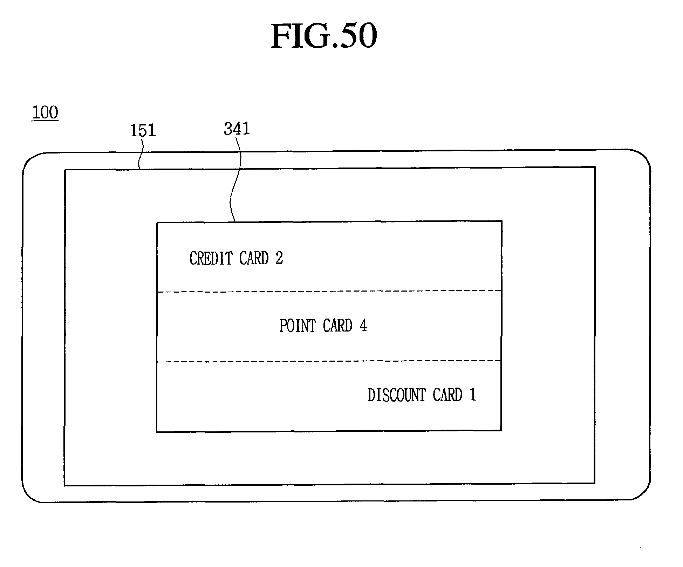

In addition, the controller 180 can also generate a card image including card information on each of different types of a plurality of cards. A description thereof will be provided below with reference to FIGs. 49 and 50. In particular, FIG. 49 illustrates a user input for creating an integrated card image having information on a plurality of cards according to an embodiment of the present invention, and FIG. 50 illustrates a first integrated card image according to an embodiment of the present invention.

Referring to FIG. 49, the controller 180 can display first, second, third and fourth credit card images 311, 312, 313 and 314 corresponding to payment cards, can display first, second, third and fourth point card images 321, 322, 323 and 324 corresponding to point cards, and can display first, second, third and fourth discount card images 331, 332, 333 and 334 corresponding to discount cards, on the display unit 151. The controller 180 can obtain a user input in which the second credit card image 312, the fourth point card image 324, and the first discount card image 331 displayed on the display unit 151 are sequentially swiped using two fingers.

Accordingly, as illustrated in FIG. 50, the controller 180 can create a first integrated card image 341 for a first integrated card including card information on each of a second credit card, a fourth point card, and a first discount card. In addition, the controller 180 can display the created first integrated card image 341 on the display unit 151. Based on a user input for the first integrated card image 341, the controller 180 can transmit an integrated payment signal for card information (on each of the second credit card, the fourth point card, and the first discount card) included in the first integrated card to the payment terminal 200. Based on the transmitted integrated payment signal, the payment can terminal 200 can perform payment for goods or services to payment on the payment terminal 200.

The controller 180 in the terminal 100 can transmit at once payment signals for card information (on each of the second credit card, the fourth point card, and the first discount card) included in the first integrated card to the payment terminal 200, or can sequentially transmit the payment signals to the payment terminal 200. The controller 180 in the terminal 100 can transmit payment signals for card information (on each of the second credit card, the fourth point card, and the first discount card) included in the first integrated card as an integrated payment signal, or can transmit the payment signals as separate payment signals

The terminal 100 according to an embodiment of the present disclosure can detect a swing motion of the terminal 100, and can perform an operation related to payment. Specifically, the controller 180 can obtain a motion input (in which the terminal 100 is swung) through the sensor unit 140. For example, the sensor unit 140 can detect a user's swing motion of the terminal 100 through at least one of an acceleration sensor, a G-sensor a gyroscope sensor, or a motion sensor included in the sensor unit 140. The controller 180 can obtain motion of the terminal 100 detected from the sensor unit 140. When the motion of the terminal 100 is obtained, the controller 180 can perform operation related to payment, such as Retry Payment, Cancel Payment, and Exit Payment Mode.

According to an embodiment, when the swing motion of the terminal 100 is detected, the controller 180 can retry the payment operation being performed. When the payment operation according to a payment signal transmitted from the payment terminal 200 is not authorized, the controller 180 can obtain the swing motion of the terminal 100 as a user input for retrying the corresponding payment operation. Accordingly, if the swing motion of the terminal 100 is obtained when the payment operation is not authorized according to the transmitted payment signal, the controller 180 can transmit a signal for retrying the payment operation to the payment terminal 200. Herein, the signal for retrying payment operation can be the aforesaid payment signal.

According to another embodiment, when the swing motion of the terminal 100 is obtained, the controller 180 can cancel the payment operation being performed. Before the payment operation according to a payment signal transmitted from the payment terminal 200 is authorized, the controller 180 can obtain the swing motion of the terminal 100 as a user input for cancelling the corresponding payment operation. Accordingly, if the swing motion of the terminal 100 is obtained before the payment operation is authorized according to the transmitted payment signal, the controller 180 can transmit a signal for cancelling the payment operation to the payment terminal 200.

According to still another embodiment, when the swing motion of the terminal 100 is obtained, the controller 180 can terminate a payment mode. Herein, the payment mode can refer to a mode in which card information of a user is displayed through the terminal 100, as described above. During the displaying of card information of a user or store information on a store on the display unit 151, the controller 180 can obtain the swing motion of the terminal 100 as a user input for terminating a payment mode. Accordingly, if the swing motion of the terminal 100 is obtained in a payment mode, the controller 180 can terminate the payment mode.

The aforementioned operation of the terminal 100 according to a user input swinging the terminal 100 is an illustrative example, and the present invention is not limited thereto. Therefore, various operations of the terminal 100 can be performed according to the choice by a user or a designer. Also, the terminal 100 can perform different operations depending the direction of motion with respect to the terminal 100. Accordingly, the terminal 100 can perform a first operation for motion in up and down direction with respect to the terminal 100, and can perform a second operation for motion in left and right direction with respect to the terminal 100. The terminal 100 according to the present disclosure can provide a pay tab for a user to easily select payment method, and can provide various kinds of information on the selected payment method.

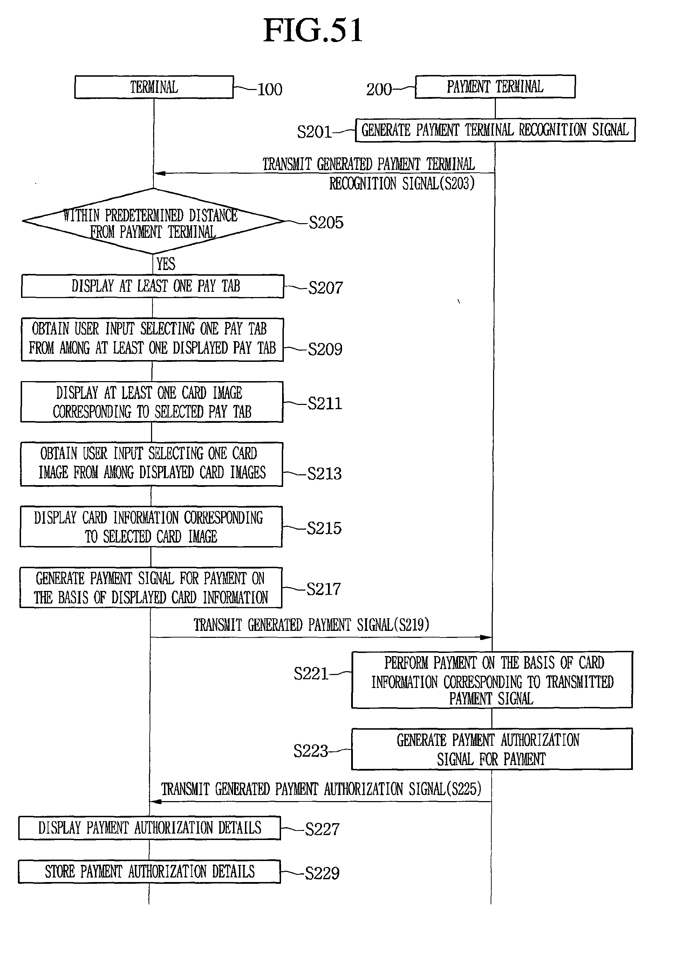

Hereinafter, a description thereof will be provided through another embodiment of the present invention. In particular, FIG. 51 is a flow diagram illustrating an operating method of a payment system according to another embodiment of the present invention. Referring to FIG. 51, the controller 210 in the payment terminal 200 generates a payment terminal recognition signal for recognizing the payment terminal 200 (S201), and transmits the generated payment terminal recognition signal to the terminal 100 through the communication unit 230 (S203).

The controller 210 can generate a payment terminal recognition signal that is a unique signal for recognizing the payment terminal 200. The payment terminal recognition signal generated by the controller 210 can include information on the store name corresponding to the payment terminal 200, the payment method supported by the payment terminal 200, the communication method supported by the payment terminal 200, etc. Also, the payment terminal recognition signal can include the aforesaid store recognition signal.

The controller 210 can transmit the generated payment terminal recognition signal to the terminal 100 through the communication unit 230. According to an embodiment, the controller 210 can transmit the generated payment terminal recognition signal to the terminal 100 using a Bluetooth low energy (BLE) method through the communication unit 230. Herein, the BLE method by which the payment terminal recognition signal is transmitted can correspond to a known Beacon. Also, the controller 210 can transmit the generated payment terminal recognition signal to the terminal 100 by a RFID method through the communication unit 230.

The controller 210 can transmit the generated payment terminal recognition signal to the terminal 100 by an NFC method through the communication unit 230. The controller 210 can transmit the generated payment terminal recognition signal to the terminal 100 in the form of a high-frequency wave through the communication unit 230. Herein, the high-frequency wave transmitting the payment terminal recognition signal can correspond to a frequency region which can not be recognized by a user.

The aforementioned transmission of the payment terminal recognition signal is an illustrative example, and the present invention is not limited thereto. Therefore, the payment can terminal 200 can transmit the payment terminal recognition signal in various ways depending on the choice by a user or a designer. Based on the transmitted payment terminal recognition signal, the terminal 100 determines whether the terminal 100 is located within a predetermined distance from the payment terminal 200 (S205), and displays at least one pay tab when it is determined that the terminal 100 is located within the predetermined distance (S207). The terminal 100 obtains a user input selecting one pay tab from among at least one displayed pay tab (S209), and displays at least one card image corresponding to the selected pay tab (S211).

The controller 180 in the terminal 100 can receive the payment terminal recognition signal transmitted through the short range communication module 114 or the microphone 122. According to an embodiment, the controller 180 can receive the payment terminal recognition signal transmitted using a BLE method through the short range communication module 114. Also, the controller 180 can receive the payment terminal recognition signal transmitted in the form of a high-frequency wave through the microphone 122.

The aforementioned reception of the payment terminal recognition signal is an illustrative example, and the present invention is not limited thereto. Therefore, the terminal 100 can receive the payment terminal recognition signal in various ways depending on the type of the payment terminal recognition signal transmitted by the payment terminal 200.

Based on the transmitted payment terminal recognition signal, the controller 180 in the terminal 100 can determine whether the terminal 100 is located within a predetermined distance from the payment terminal 200. Herein, the predetermined distance can refer to a physical distance, or refer to a conceptual distance meaning that the terminal is located within the same store.

For example, based on at least one of the intensity or the reception sensitivity of the transmitted payment terminal recognition signal, the controller 180 can determine whether the terminal 100 is located with a predetermined distance from the payment terminal 200. As another example, if the payment terminal recognition signal is a signal that can be transmitted from the payment terminal 200 to the terminal 100 only within a predetermined distance, the controller 180 can determine that the terminal 100 is located within the predetermined distance from the payment terminal 200 when the payment terminal recognition signal is received.

When it is determined that the terminal 100 is located within a predetermined distance from the payment terminal 200, the controller 180 can display a pay tab for selecting payment method on the display unit 151. Then, the controller 180 can obtain a user input selecting one pay tab from among the displayed pay tabs, and can display at least one card image corresponding to the selected pay tab on the display unit 151.

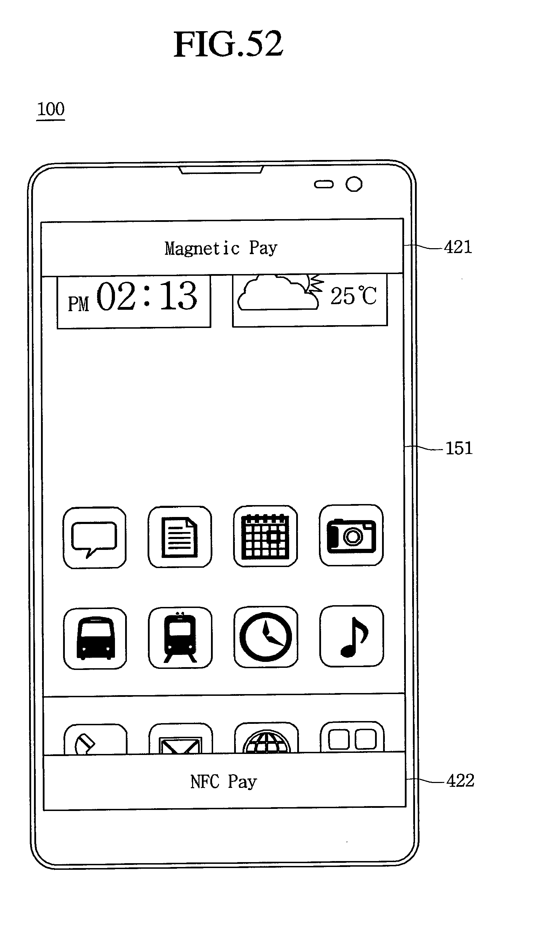

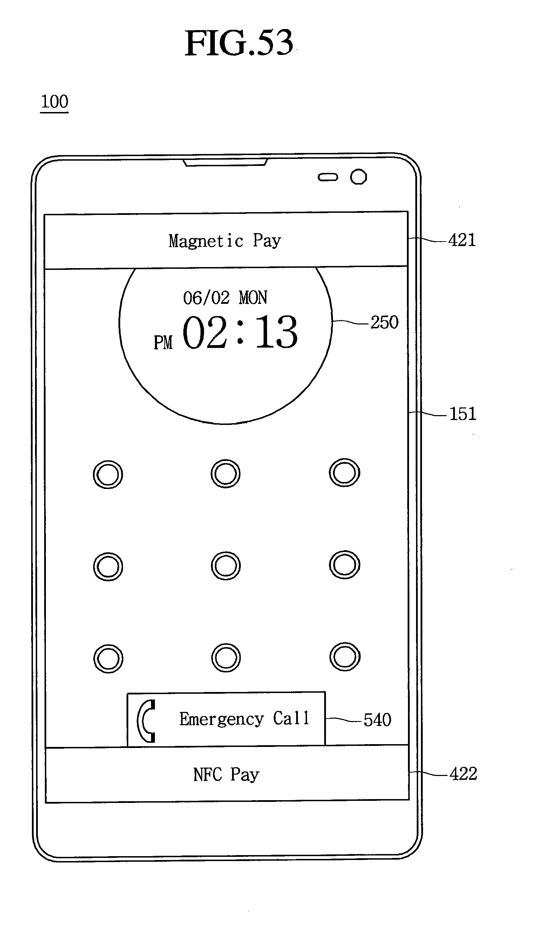

An embodiment will be described with reference to FIGs. 52 to 53. In particular, FIG. 52 illustrates a pay tab display according to an embodiment of the present invention, and FIG. 53 illustrates a pay tab display according to another embodiment of the present invention;

Referring to FIG. 52, when it is determined that the terminal 100 is located in a predetermined distance from the payment terminal 200, the controller 180 in the terminal 100 can display a magnetic pay tab 421 and an NFC pay tab 422 as at least one pay tab on the display unit 151. The magnetic pay tab 421 can be a tab for displaying at least one payment method corresponding to a magnetic method, and the NFC pay tab 422 can be a tab for displaying at least one payment method corresponding to a near field communication (NFC) method.

The terminal 100 can display a pay tab in a screen displayed on the display unit 151 according to operating states of the terminal. For example, as illustrated in FIG. 52, when the terminal 100 is displaying a home screen as a default screen of the terminal 100, the aforesaid pay tabs can be displayed in a partial region of the home screen. Also, as illustrated in FIG. 53, when the terminal 100 is displaying a lock screen on the display unit 151, or is in a slip mode in which the display unit 151 is turned off, the aforesaid pay tabs can be displayed in a partial region of the lock screen displayed on the display unit 151.

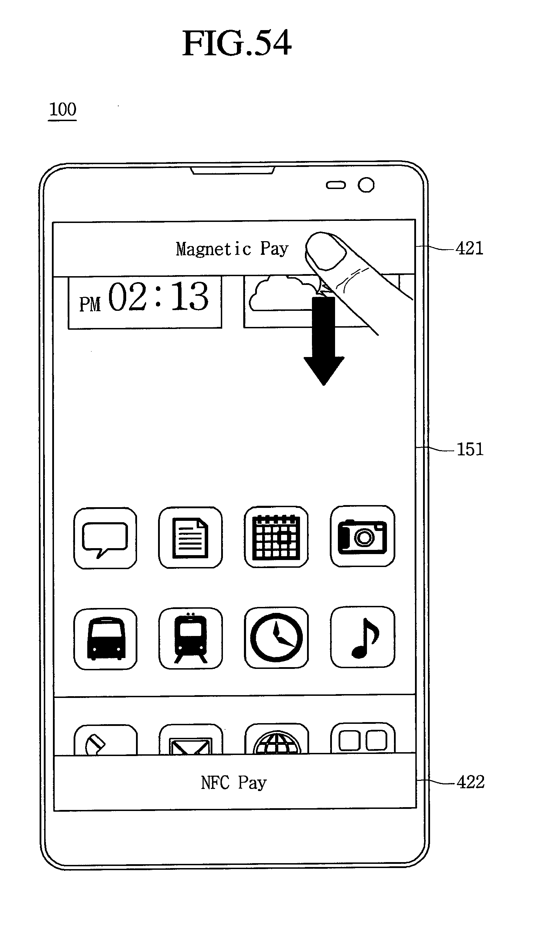

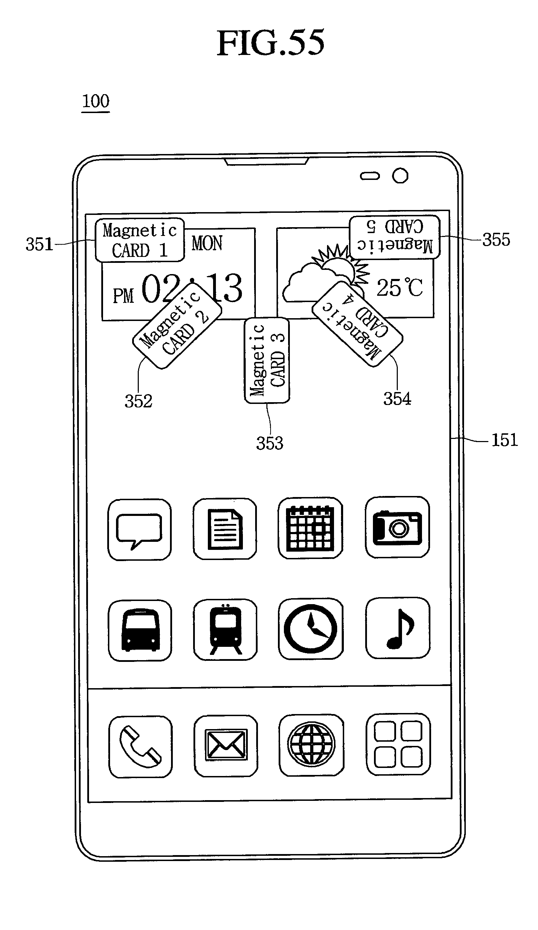

An embodiment of a card image display according to a selected pay tab will be described with reference to FIGs. 54 and 55. In particular, FIG. 54 illustrates a user input to a pay tab according to an embodiment of the present invention, and FIG. 55 illustrates a card image display corresponding to a magnetic pay tab according to an embodiment of the present invention.

Referring to FIG. 54, the controller 180 can display a magnetic pay tab 421 and an NFC pay tab 422 on the display unit 151. When a user input is obtained in which the magnetic pay tab 421 displayed on the display unit 151 is dragged downwards, the controller 180 can display card images for at least one payment method corresponding to a magnetic method. Accordingly, as illustrated in FIG. 55, the controller 180 can display first, second, third, fourth, and fifth magnetic card images 351, 352, 353, 354, and 355 for a plurality of payment method corresponding to a magnetic method at the top of the display unit 151. Herein, the first to fifth magnetic card images 351 to 355 can respectively correspond to payment method that can be paid through a magnetic method.

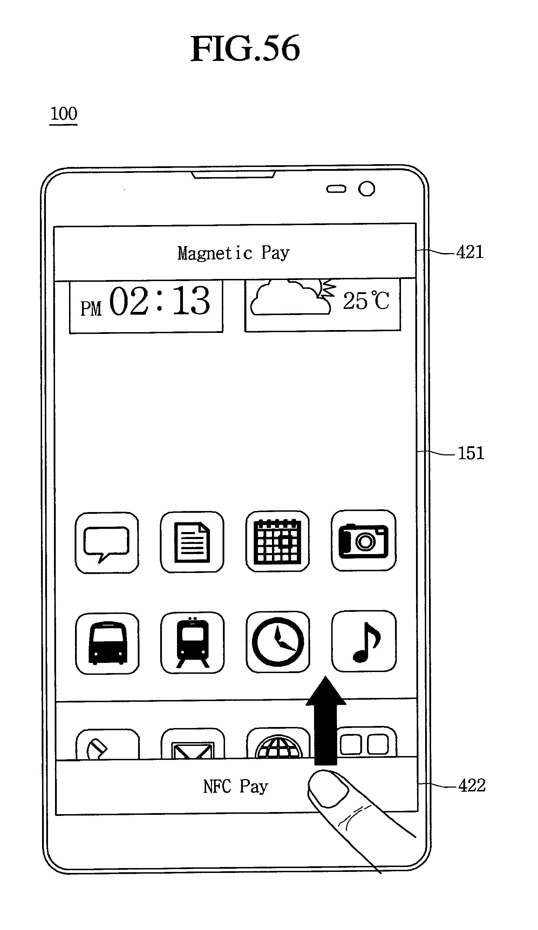

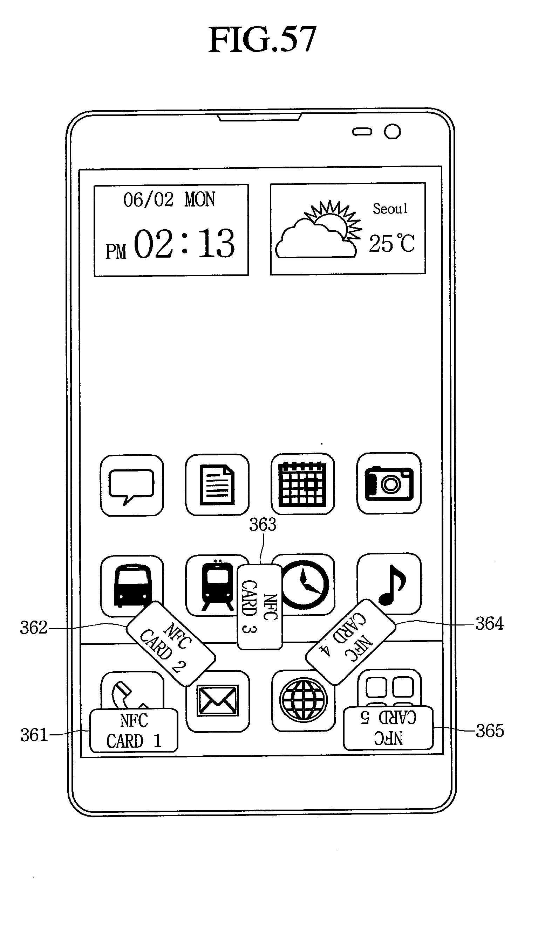

An embodiment of a card image display according to a selected pay tab will be described with reference to FIGs. 56 and 57. In particular, FIG. 56 illustrates a user input to a pay tab according to another embodiment of the present invention, and FIG. 57 illustrates a card image display corresponding to an NFC pay tab according to another embodiment of the present invention;

Referring to FIG. 56, the controller 180 can display a magnetic pay tab 421 and an NFC pay tab 422 on the display unit 151. When a user input is obtained in which the NFC pay tab 422 displayed on the display unit 151 is dragged downwards, the controller 180 can display card images for at least one payment method corresponding to an NFC method. Accordingly, as illustrated in FIG. 57, the controller 180 can display first, second, third, fourth, and fifth NFC card images 361, 362, 363, 364, and 365 for a plurality of payment method corresponding to an NFC method at the bottom of the display unit 151. Herein, the first to fifth NFC card images 361 to 365 can respectively correspond to payment method that can be paid through an NFC method.

When a user input for switching a plurality of card images displayed on the display unit 151 is obtained, the controller 180 can display other card images which are not being displayed on the display unit 151. As this has already been described in detail in FIGs. 10A and 10B, a description thereof will not be provided.

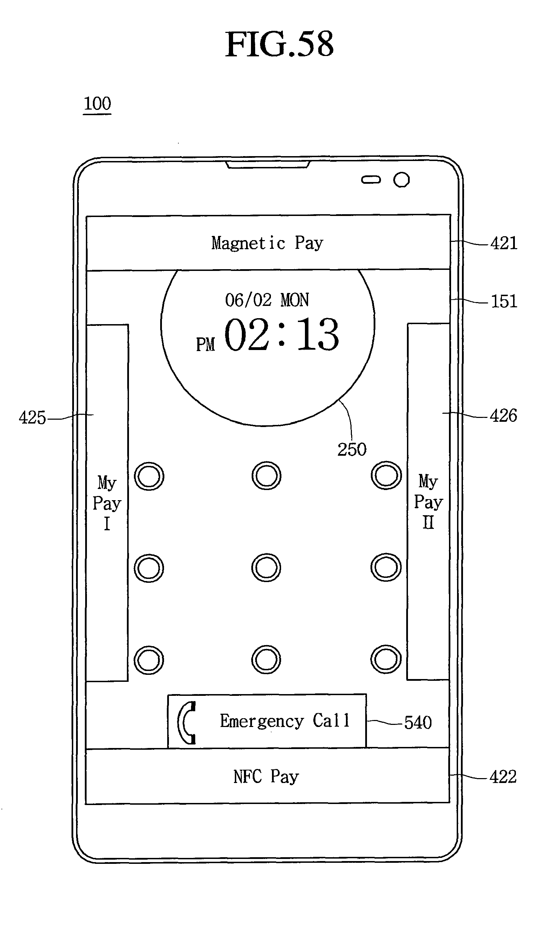

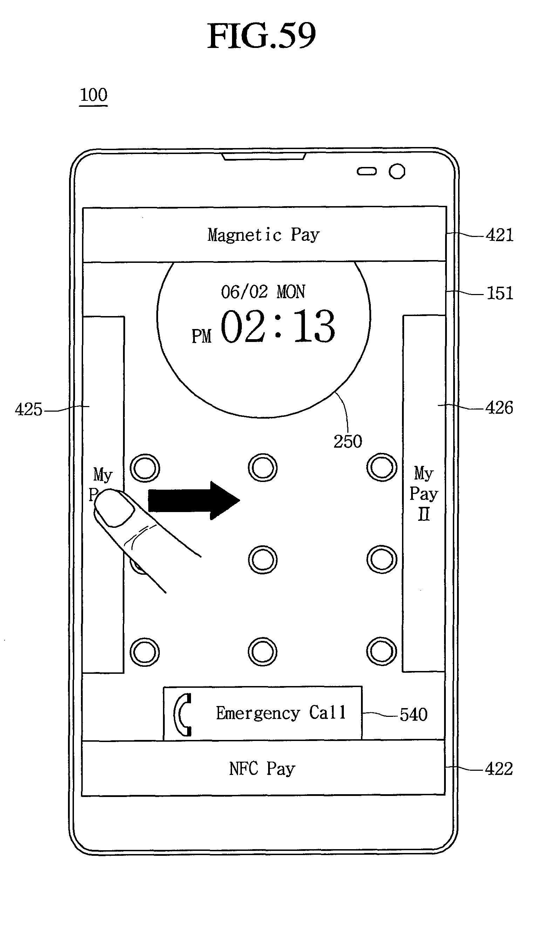

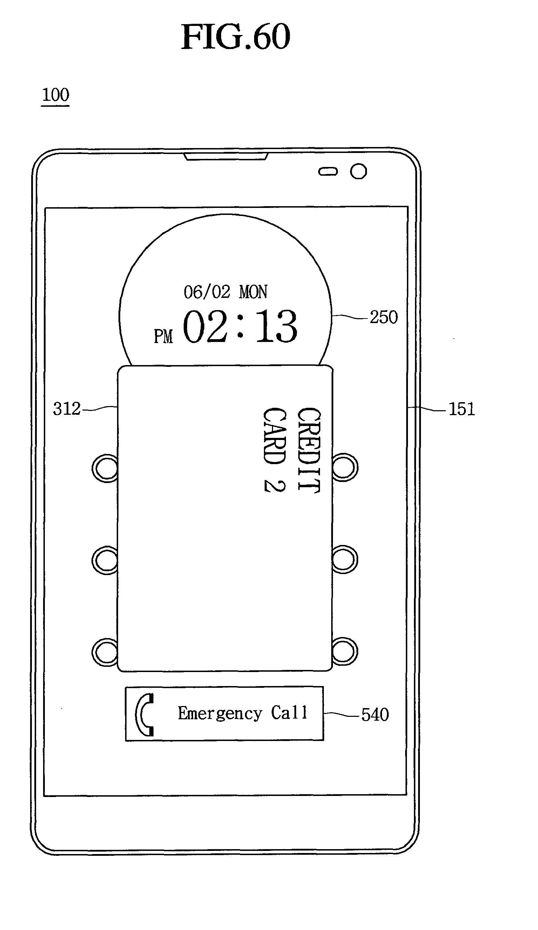

The terminal 100 can also display a pay tab for displaying a card image for a specific card on the display unit 151. A description thereof will be provided below with reference to FIGs. 58 to 60. In particular, FIG. 58 illustrates a pay tab display according to still another embodiment of the present invention, FIG. 59 illustrates a user input to a pay tab according to still another embodiment of the present invention, and FIG. 60 illustrates a card image display according to an embodiment of the present invention;

Referring to FIG. 58, the controller 180 can display a magnetic pay tab 421, an NFC pay tab 422, a first user pay tab 425, and a second user pay tab 426 on the display unit 151. Herein, the first user pay tab 425 can be a pay tab for displaying a card image corresponding to a specific card set by a user, and the second user pay tab 426 can be a pay tab for displaying a card image corresponding a card frequently used by a user. As illustrated in FIG. 59, when a user input is obtained in which the first user pay tab 425 displayed on the display unit 151 is dragged to the right, the controller 180 can display a card image for a second credit card that is a specific card set by a user. Accordingly, as illustrated in FIG. 60, the controller 180 can display a second credit card image 312 on the display unit 151.

The aforementioned pay tab is an illustrative example, and the present invention is not limited thereto. Therefore, the terminal 100 can display pay tabs for various categories such as communication methods, payment methods, and card types depending on the choice by a user or a designer. Herein, the payment method such as a communication method can refer to a method for payment on the payment terminal 200 based on card information, so that the communication method and the payment method can be used as the same meaning.

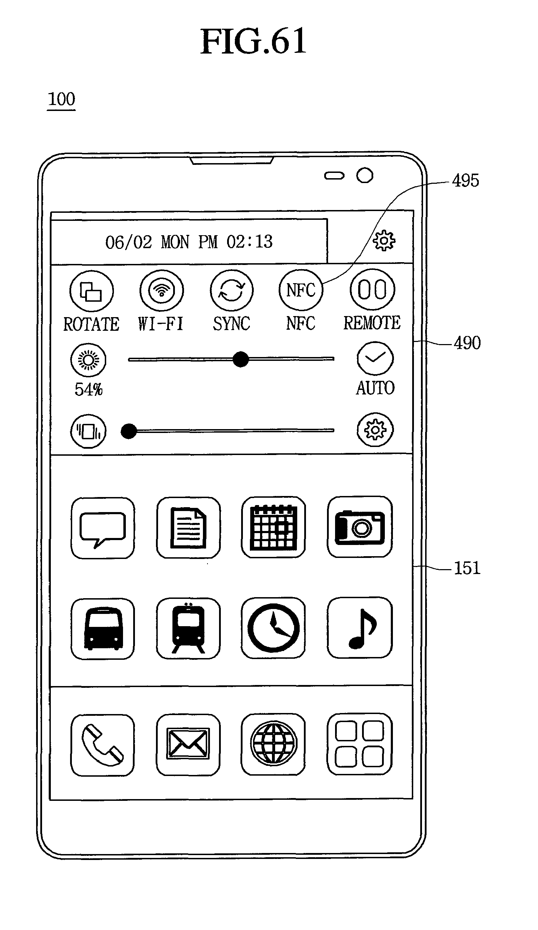

The terminal 100 can receive a user setup input for pay tabs displayed on the display unit 151 according to distances from the payment terminal 200, and can display pay tabs corresponding to the received user setup input. A description thereof will be provided below with reference to FIG. 61. In particular, FIG. 61 illustrates a control window display according to an embodiment of the present invention.

Referring to FIG. 61, the controller 180 can display a control window 490 on the display unit 151. The controller 180 can display a setup menu for screen rotation, Wi-Fi connection, synchronization, pay tab setting, brightness adjustment, vibration adjustment, etc. in the control window 490. According to an embodiment, when a user input selecting a pay tab setup menu 495 displayed in the control window 490 is obtained, the controller 180 can change the type of the pay tab displayed on the display unit 151 according to distances from the payment terminal 200.

For example, when a user input touching the pay tab setup menu 495 once is obtained, the controller 180 can set the display unit 151 to display only the NFC pay tab 422, and when a user input touching the pay tab setup menu 495 once more is obtained, the controller 180 can set the display unit 151 to display only the magnetic pay tab 421. Also, when a user input touching the pay tab setup menu 495 once more is obtained, the controller 180 can set the display unit 151 to display both the NFC pay tab 422 and the magnetic pay tab 421, and when a user input touching the pay tab setup menu 495 once more is obtained, the controller 180 can set the display unit 151 not to display the pay tabs. The aforementioned pay tab display setup is an illustrative example, and the present invention is not limited thereto. Therefore, the pay tabs can be variously set according to the setting of a user or a designer.

Referring again to FIG. 51, the controller 180 in the terminal 100 obtains a user input selecting one card image from among a plurality of displayed card images (S213), and displays card information corresponding to the selected card image (S215). The controller generates a payment signal for payment based on the displayed card information (S217), and transmits the generated payment signal to the payment terminal 200 (S219).

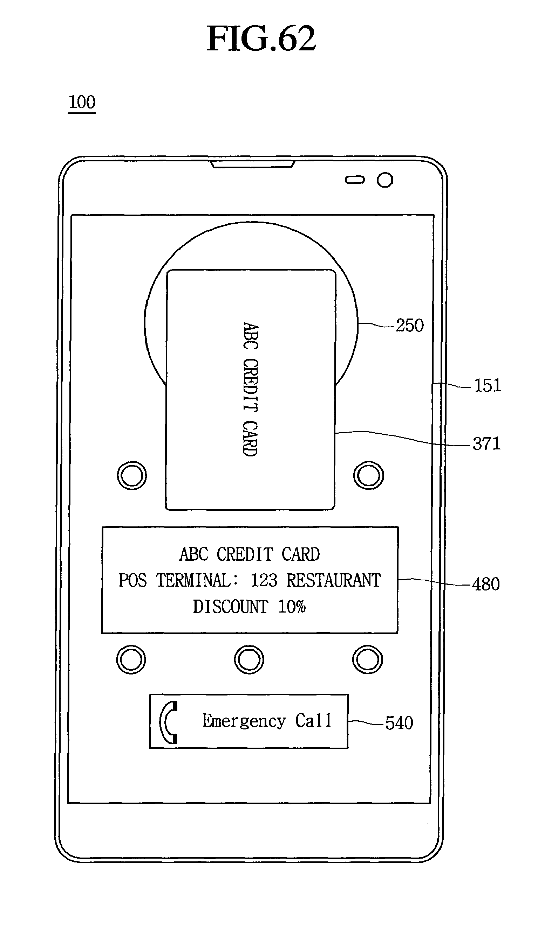

In addition, the controller 180 can obtain a user input selecting one card image from among a plurality of card images displayed on the display unit 151. The controller 180 can display card information corresponding to the selected card image on the display unit 151. A description will be provided below with reference to FIG. 62.

In particular, FIG. 62 illustrates a card information display according to an embodiment of the present invention. Referring to FIG. 62, when an ABC card image is selected from among a plurality of card images, the controller 180 can display on the display unit 151 an ABC card image 371 as the selected card image and a card info window 480 displaying card information on an ABC card. The controller 180 can display the name of card, information on the payment terminal 200, and discount information of the ABC card that is a card selected in a store corresponding to the payment terminal 200, in the card info window 480 of the ABC card corresponding to the selected card image. When specific discount terms of the ABC card corresponding to the selected card image is available, the controller 180 can also display the specific discount terms in the card info window 480.

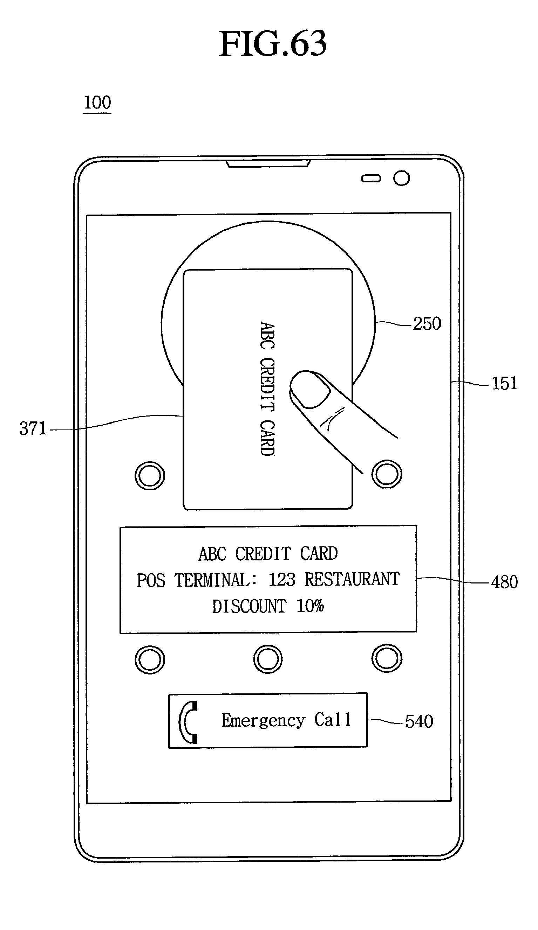

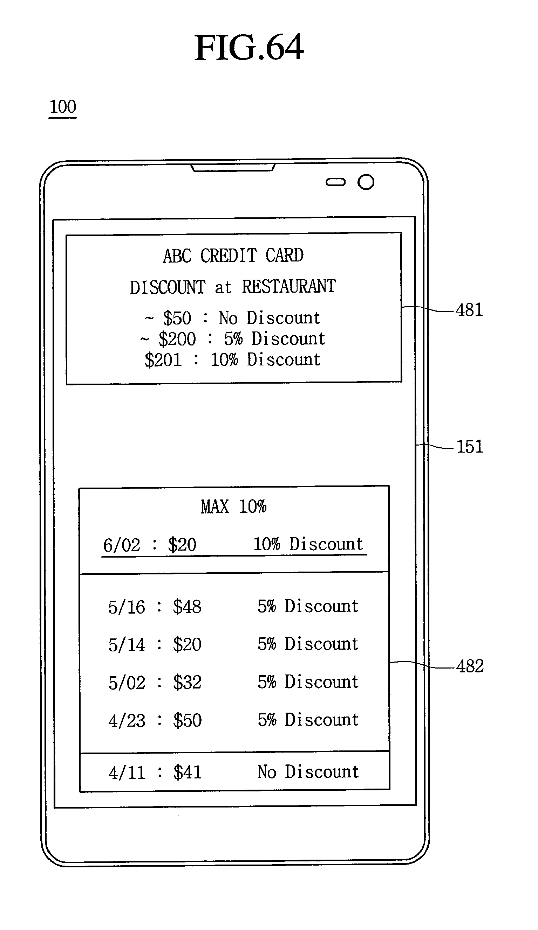

Also, the controller 180 can display specific card information including details of card usage of a selected card. A description thereof will be provided below with reference to FIGs. 63 and 64. In particular, FIG. 63 illustrates a card selection according to an embodiment of the present invention, and FIG. 64 illustrates a discount information display according to details of card usage according to an embodiment of the present invention;

Referring to FIG. 63, the controller 180 can display on the display unit 151 an ABC card image 371 as a selected card image and a card info window 480 displaying card information on an ABC card. When a user input touching the displayed ABC card image 371 is obtained, the controller 180 can display details of card usage of the ABC card and discount information according to the details of card usage. Accordingly, as illustrated in FIG. 64, the controller 180 can display on the display unit 151 a discount terms info window 481 displaying information on the discount terms of the ABC card and a usage details window 482 displaying details of usage of the ABC card.

Also, the controller 180 can display the details of usage of the ABC card displayed in the usage details window 482, separately by used periods according to discount terms. For example, the controller 180 can display a period in which discount is not available, e.g. a period corresponding to details of usage on April 11, in a first color, and can display a period in which 5 % discount is available, e.g. a period corresponding to details of usage from April 23 to May 16, in a second color. Herein, the first color can be a red color and the second color can be a yellow color.

Also, the controller 180 can display a period in which 10 % discount is to be available according to expected payment, e.g. a period corresponding to details of usage on June 2, in a third color. Herein, the third color can be a green color, and the details of usage corresponding to the expected payment can be displayed separately from details of usage of which the payment is completed.

When displaying detailed card information including details of usage for a selected card image, the controller 180 can display the discount terms info window and usage details window displaying card information in which a selected card image is rotated. The aforementioned card information display is an illustrative example, and the present invention is not limited thereto. Therefore, various kinds of card information or payment information can be displayed depending on the choice by a user or a designer.

Based on the card information corresponding to the displayed card image, the controller 180 can generate a payment signal for payment. Herein, the displayed card image can refer to either a selected card image or a card image corresponding to the most favorable card on payment (e.g. a discount rate and a point-earning rate) in a store corresponding to the payment terminal 200.

Specifically, the controller 180 can generate a payment signal including card information corresponding to a displayed card image or a selected card image. Herein, the card information included in the payment signal can include the card number, the user name, the expiry date, the authentication number, etc. of the card.

In addition, the controller 180 can transmit the generated payment signal to the payment terminal 200 through the wireless communication unit 110. For example, the controller 180 can transmit the generated payment signal to the payment terminal 200 using at least one communication method of Bluetooth, radio frequency identification (RFID), infrared data association (IrDA), ultra wideband (UWB), ZigBee, or near field communication (NFC) through the short range communication module 114. Also, the controller 180 can transmit the generated payment signal to the payment terminal 200 as a magnetic signal through the short range communication module 114.

Based on the card information corresponding the transmitted payment signal, the controller 210 in the payment terminal 200 performs a payment (S221). The controller 210 in the payment terminal 200 generates a payment authorization signal for the performed payment (S223), and transmits the generated payment authorization signal to the terminal 100 (S225).

Based on the card information corresponding to the payment signal, the controller 210 can perform a payment for goods or services to payment on the payment terminal 200. Then, the controller 210 can generate a payment authorization signal for the performed payment. The payment authorization signal can include an authorization number and authorization details on the authorized payment. For example, the controller 180 can generate a payment authorization signal including a card authorization number and card authorization details according to the payment performed with card information on the selected ABC credit card. The controller 210 can transmit the generated payment authorization signal to the terminal 100. For example, the controller 210 can transmit the generated payment authorization signal to the terminal 100 using at least one communication method of Bluetooth, radio frequency identification (RFID), infrared data association (IrDA), ultra wideband (UWB), ZigBee, or near field communication (NFC) through the communication unit 230.

Based on the transmitted payment authorization signal, the controller 180 in the terminal 100 displays payment authorization details (S227). The controller 180 in the terminal 100 stores the payment authorization details of which the payment is completed (S229). In addition, the controller 180 can receive the payment authorization signal transmitted from the payment terminal 200 through the wireless communication unit 110. For example, the controller 180 can receive the payment authorization signal transmitted from the payment terminal 200 through the short range communication module 114.

Based on the received payment authorization signal, the controller 180 can display payment authorization details on the display unit 151. For example, the controller 180 can display a receipt displaying payment authorization information on the payment authorization details on the display unit 151. As this has already been described in detail in FIG. 42, a description thereof will not be provided. Further, the controller 180 can also store the payment authorization details according to the transmitted payment authorization signal in the memory 160.

According to the terminal and the operating method thereof in accordance with the present disclosure, a user can easily perform a payment according to the specific payment sequence of a store in which the payment is to be made, and thus can conveniently perform multiple payments using various payment method. Furthermore, the terminal according to the present disclosure can effectively provide various kinds of information on users and payment method related to stores in which payments are to be made, so that users can easily confirm information on payments.

The above-described present disclosure can be realized as a computer-readable code in program recording media. The computer-readable media includes any type of recording device storing data readable by a computer system. Examples of computer-readable media are hard disk drives (HDDs), solid state disks (SSDs), silicon disk drives (SDDs), ROMs, RAMs, CD-ROMs, magnetic tapes, floppy disks, and optical data storage devices, and also include realization in the form of a carrier wave (e.g. transmission through internet). The computer can include the controller 180 in the terminal. Therefore, the above detailed description should not be construed as being limited in any aspect, but considered as being illustrative. The scope of the present disclosure should be determined by reasonable interpretation of the appended claims, and includes all modifications within the equivalents thereof.

## Claims

1. An operating method for a terminal transmitting card information for payment to a payment terminal, the operating method comprising:
obtaining store information including a specific payment sequence of a store corresponding to the payment terminal; and
transmitting payment signals respectively including a plurality of pieces of card information for payment to the payment terminal according to the specific payment sequence of the store, based on the obtained store information.

2. The operating method of claim 1, wherein the plurality of pieces of card information includes one of a payment card for payment, a point card for earning points, and a discount card for discount services.

3. The operating method of claim 2, wherein the transmitting the payment signal comprises transmitting a plurality of payment signals including card information respectively corresponding to a plurality of cards from among the payment card, the point card, and the discount card to the payment terminal in a sequence corresponding to the specific payment sequence, based on the obtained store information.

4. The operating method of claim 1, further comprising:
displaying card images respectively corresponding to the plurality of pieces of card information according to the specific payment sequence of the store, based on the obtained store information.

5. The operating method of claim 4, wherein the displaying the card images comprises arranging and displaying the card images respectively corresponding to the plurality of pieces of card information around a virtual ellipse.

6. The operating method of claim 5, wherein the displaying the card images further comprises enlarging or reducing and displaying the displayed card images in response to a user input being obtained in which the displayed card images are moved in one direction.

7. The operating method of claim 1, further comprising:
receiving, from the payment terminal, a payment authorization signal for payment details performed according to the transmitted payment signal; and
displaying information on the performed payment details, based on the received payment authorization signal.

8. A terminal (100) configured to transmitt card information for payment to a payment terminal (200), the terminal (100) comprising:
a display unit (151) configured to display the card information;
a wireless communication unit (110) configured to receive store information including a specific payment sequence of a store corresponding to the payment terminal; and
a controller (180) configured to transmit payment signals respectively including a plurality of pieces of card information for payment to the payment terminal according to the specific payment sequence of the store through the wireless communication unit, based on the received store information.

9. The terminal of claim 8, wherein the plurality of pieces of card information include one of a payment card for payment, a point card for earning points, and a discount card for discount services.

10. The terminal of claim 9, wherein the controller (180) is further configured to transmit a plurality of payment signals including card information respectively corresponding to a plurality of cards from among the payment card, the point card, and the discount card to the payment terminal in a sequence corresponding to the specific payment sequence, based on the obtained store information.

11. The terminal of claim 10, wherein the controller (180) is further configured to display card images respectively corresponding to the plurality of pieces of card information on the display unit according to the specific payment sequence of the store, based on the obtained store information.

12. The terminal of claim 11, wherein the controller (180) is further configured to arrange and display the card images respectively corresponding to the plurality of pieces of card information around a virtual ellipse.

13. The terminal of claim 12, wherein the controller (180) is further configured to enlarge or reduce and display the displayed card images in response to a user input being obtained in which the displayed card images are moved in one direction.

14. The terminal of claim 8, wherein the wireless communication unit (110) is further configured to receive, from the payment terminal (200), a payment authorization signal for payment details performed according to the transmitted payment signal, and
wherein the controller (180) is further configured to display information on the performed payment details on the display unit (151), based on the received payment authorization signal.

15. A payment system comprising:
a terminal (100) configured to receive store information including a specific payment sequence of a store, and transmit payment signals including a plurality of pieces of card information for payment according to the specific payment sequence of the store, based on the received store information; and
a payment terminal (200) configured to receive the payment signals including the plurality of pieces of card information, and perform payment for each of the plurality of pieces of card information, based on the received payment signals.

16. The payment system of claim 15, wherein the payment terminal (200) is further configured to transmit, to the terminal (100), a payment authorization signal for payment details on each of the plurality of pieces of card information performed according to the transmitted payment signals.

17. The payment system of claim 16, wherein the terminal (100) is further configured to display information on the performed payment details, based on the transmitted payment authorization signal.

18. The payment system of claim 15, wherein the payment terminal (200) is further configured to transmit a store recognition signal for recognizing a store where the payment terminal (200) is located, and
wherein the terminal (100) is further configured to obtain information on the store, based on the transmitted store recognition signal,
and/or wherein the terminal (100) is further configured to:
determine whether the terminal (100) is located within a payment possible area in which the terminal can perform a payment with the payment terminal (200), and based on the determination result,
generate a vibration indicating that the terminal (100) is located within the payment possible area, when the terminal is located within the payment possible area, and
generate a vibration in a direction corresponding to the payment terminal (200), in response to the terminal (100) being located outside the payment possible area,
and/or wherein the terminal (100) is further configured to display card information corresponding to a second payment in a second payment sequence, in response to the payment terminal (200) performing a first payment in a first payment step in the specific payment sequence according to the transmitted payment signal.
